# EUROPEAN PATENT APPLICATION

(11) **EP 4 509 427 A1**
(43) Date of publication of application: **19.02.2025**
(21) Application number: 23788402.8
(22) Date of filing: 13.04.2023
(51) Int. Cl.: B65D 81/05, G02F 1/13, B65D 85/30, B65D 85/672

(54) **DIMMING SHEET PACKING BODY**

(30) Priority: 13.04.2022 JP 2022066110; 13.04.2022 JP 2022066111; 17.11.2022 JP 2022183862; 17.11.2022 JP 2022183863
(71) Applicant: Toppan Holdings Inc., Tokyo 110-0016 (JP)
(72) Inventor: OONISHI, Takashi, Tokyo 110-0016 (JP); HOSHINO, Tatsuya, Tokyo 110-0016 (JP); KATO, Atsuhiro, Tokyo 110-0016 (JP); YAMAMOTO, Tatsuya, Tokyo 110-0016 (JP)
(74) Representative: TBK
(86) International application number: PCT/JP2023/015049
(87) International publication number: WO 2023/199985

(57) **Abstract**

A packaging body for a light control sheet including: a light control sheet 11; and a packaging member that supports the light control sheet 11. The light control sheet 11 includes a first transparent electrode film, a second transparent electrode film, a sealing section that seals a gap between the first transparent electrode film and the second transparent electrode film in an outer peripheral section of the light control sheet, and a liquid crystal composition that is enclosed in the gap surrounded by the sealing section. The packaging body includes an easy-peel tape 16a that covers the sealing section and fixes the sealing section to the packaging member. This allows the packaging body for the light control sheet to protect the quality of the light control sheet.

## Description

### Technical Field

The present disclosure relates to a packaging body for a light control sheet.

### Background Art

A first example of the packaging body described above includes a laminate and a pair of protective plates that sandwiches the laminate. The laminate includes a plate-shaped base body and a protective film that is disposed on at least one of a pair of main surfaces of the plate-shaped base body (see, for example, PTL 1). A light control sheet that is an example of the plate-shaped base body includes a first transparent electrode film, a second transparent electrode film, and a light control layer that is sandwiched between the first transparent electrode film and the second transparent electrode film. The light control layer includes a liquid crystal composition. The outer peripheral section of the light control sheet includes a sealing section that seals gaps with the first transparent electrode film and the second transparent electrode film in the light control layer.

A second example of the packaging body described above is a roll obtained by winding a plastic film around a cylindrical core. A winding start point of the plastic film is adhered to the core by a single-sided adhesive tape. This fixes the start point, that is a portion at which the plastic film starts to be wound, to the cylindrical core (see, for example, PTL 2).

### Citation List

### Patent Literature

PTL 1: JP 2020-93839 A
PTL 2: JP 2018-76162 A

### Summary of the Invention

### Technical Problem

A packaging body for a light control sheet is required to protect the quality of the light control sheet.

### Solution to Problem

A packaging body for a light control sheet that solves the problem described above is a packaging body for a light control sheet including: a light control sheet; and a packaging member that supports the light control sheet. The light control sheet includes a first transparent electrode film, a second transparent electrode film, a sealing section that seals a gap between the first transparent electrode film and the second transparent electrode film in an outer peripheral section of the light control sheet, and a liquid crystal composition that is enclosed in the gap surrounded by the sealing section. The packaging body includes an easy-peel tape that covers the sealing section and fixes the sealing section to the packaging member.

A packaging body for a light control sheet that solves the problem described above is a packaging body for a light control sheet including: a light control sheet; and a packaging member that supports the light control sheet. The light control sheet includes a first transparent electrode film, a second transparent electrode film, a sealing section that seals a gap between the first transparent electrode film and the second transparent electrode film in an outer peripheral section of the light control sheet, and a liquid crystal composition that is enclosed in the gap surrounded by the sealing section. One protector includes a first protective plate, a second protective plate, and the light control sheet that is sandwiched between the first protective plate and the second protective plate. The packaging member includes a packaging box that accommodates the protector, and a cushioning member that is disposed at an edge of the protector to space a corner portion of the protector apart from an inner surface of the packaging box in a planar direction of the light control sheet.

A packaging body for a light control sheet that solves the problem described above is a packaging body for a light control sheet including: a light control sheet; and a packaging member that supports the light control sheet. The light control sheet includes a first transparent electrode film, a second transparent electrode film, a sealing section that seals a gap between the first transparent electrode film and the second transparent electrode film in an outer peripheral section of the light control sheet, and a liquid crystal composition that is enclosed in the gap surrounded by the sealing section. One protector includes a first protective plate, a second protective plate, and the light control sheet that is sandwiched between the first protective plate and the second protective plate. The packaging member includes a packaging box that accommodates the protector, and a cushioning member that is disposed at an edge of the protector to space a corner portion of the protector apart from an inner surface of the packaging box in a planar direction of the light control sheet.

A packaging body for a light control sheet that solves the problem described above is a packaging body for a light control sheet including: a light control sheet; and a packaging member that supports the light control sheet. The light control sheet includes a first transparent electrode film, a second transparent electrode film, a sealing section that seals a gap between the first transparent electrode film and the second transparent electrode film in an outer peripheral section of the light control sheet, and a liquid crystal composition that is enclosed in the gap surrounded by the sealing section. One protector includes a first protective plate, a second protective plate, and the light control sheet that is sandwiched between the first protective plate and the second protective plate. The packaging member includes a packaging box that accommodates the protector, and a cushioning member that is disposed at an edge of the protector to space the protector apart from an inner surface of the packaging box in a thickness direction of the light control sheet.

A packaging body for a light control sheet that solves the problem described above is a packaging body for a light control sheet including: a light control sheet; and a packaging member that supports the light control sheet. The light control sheet includes a first transparent electrode film, a second transparent electrode film, a sealing section that seals a gap between the first transparent electrode film and the second transparent electrode film in an outer peripheral section of the light control sheet, and a liquid crystal composition that is enclosed in the gap surrounded by the sealing section. The packaging member includes a tubular member around which the light control sheet is wound. The tubular member includes two tube end sections on both sides of the tubular member in an axial direction. The two tube end sections are exposed from the light control sheet wound around the tubular member. The light control sheet includes a winding start section that is a portion which comes into contact with an outer peripheral surface of the tubular member and at which the light control sheet starts to be wound around the tubular member. The winding start section includes one short side of the light control sheet, and a fixation target section that is located apart from the short side on each of two long sides joined to the short side. The packaging body further includes first easy-peel tapes and second easy-peel tapes. The first easy-peel tapes fix the short side and a corner portion of the light control sheet to the outer peripheral surface of the tubular member. The corner portion includes the short side and each of the long sides. The second easy-peel tapes fix the two respective fixation target sections to the outer peripheral surface in the tube end sections.

A packaging body for a light control sheet that solves the problem described above is a packaging body for a light control sheet including: a light control sheet; and a packaging member that supports the light control sheet. The light control sheet includes a first transparent electrode film, a second transparent electrode film, a sealing section that seals a gap between the first transparent electrode film and the second transparent electrode film in an outer peripheral section of the light control sheet, and a liquid crystal composition that is enclosed in the gap surrounded by the sealing section. The packaging member includes a tubular member around which the light control sheet is wound. The tubular member includes two tube end sections on both sides of the tubular member in an axial direction. The two tube end sections are exposed from the light control sheet wound around the tubular member. The light control sheet includes a winding start section that is a portion which comes into contact with an outer peripheral surface of the tubular member and at which the light control sheet starts to be wound around the tubular member. The winding start section includes one short side of the light control sheet, and fixation target sections for two respective long sides joined to the short side. The fixation target sections are located apart from the short side on the two long sides. Each of the two fixation target sections is disposed only between the tube end section exposed in the axial direction from the fixation target section and the fixation target section. The packaging body includes a first easy-peel tape that fixes the short side to an outer peripheral surface of the tubular member, and two second easy-peel tapes that are spaced apart from each other in the axial direction. The two second easy-peel tapes fix the fixation target sections one by one to the outer peripheral surface in the tube end sections.

### Advantageous Effects of the Invention

A packaging body for a light control sheet according to the present disclosure increases the protection of the quality of the light control sheet.

### Brief Description of the Drawings

[Fig. 1] Fig. 1 is a plan view of a light control sheet according to a first embodiment.
[Fig. 2] Fig. 2 is a cross-sectional view of a cross-sectional structure taken along a line 2-2 in Fig. 1.
[Fig. 3] Fig. 3 is an exploded perspective view illustrating disposition of a protective plate according to the first embodiment.
[Fig. 4] Fig. 4 is an exploded perspective view illustrating disposition of a tape according to the first embodiment.
[Fig. 5] Fig. 5 is a cross-sectional view of a cross-sectional structure taken along a line 5-5 in Fig. 4.
[Fig. 6] Fig. 6 is a perspective view of a packaging body including a stretch tape.
[Fig. 7] Fig. 7 is an exploded perspective view illustrating disposition of a protector according to a second embodiment.
[Fig. 8] Fig. 8 is an exploded perspective view illustrating disposition of a protector according to a third embodiment.
[Fig. 9] Fig. 9 is a perspective view of a cushioning member according to the third embodiment.
[Fig. 10] Fig. 10 is a perspective view of a packaging box according to the third embodiment.
[Fig. 11] Fig. 11 is a cross-sectional view of the cushioning member according to the third embodiment.
[Fig. 12] Fig. 12 is a table illustrating a result of an evaluation according to the third embodiment.
[Fig. 13] Fig. 13 is a plan view of a light control sheet according to a fourth embodiment.
[Fig. 14] Fig. 14 is a cross-sectional view of a cross-sectional structure taken along a line 2-2 in Fig. 13.
[Fig. 15] Fig. 15 is a perspective view illustrating a state of the light control sheet when starting to be wound.
[Fig. 16] Fig. 16 is a perspective view illustrating a state of the light control sheet that has finished being wound.
[Fig. 17] Fig. 17 is a schematic diagram illustrating a state in which the light control sheet is unwound.
[Fig. 18] Fig. 18 is a schematic diagram illustrating a curved shape of the light control sheet.
[Fig. 19] Fig. 19 is a schematic diagram illustrating the curved shape of the light control sheet.
[Fig. 20] Fig. 20 is a perspective view illustrating a state of the light control sheet that is positioned.
[Fig. 21] Fig. 21 is a perspective view illustrating a state of a tubular member that is positioned.
[Fig. 22] Fig. 22 is a cross-sectional view of a cross-sectional structure taken along a line 10-10 in Fig. 9.
[Fig. 23] Fig. 23 is a process diagram illustrating a method for manufacturing the packaging body.
[Fig. 24] Fig. 24 is a process diagram illustrating the method for manufacturing the packaging body.

### Description of the Embodiments

### (First Embodiment)

### [Configuration of Light Control Sheet]

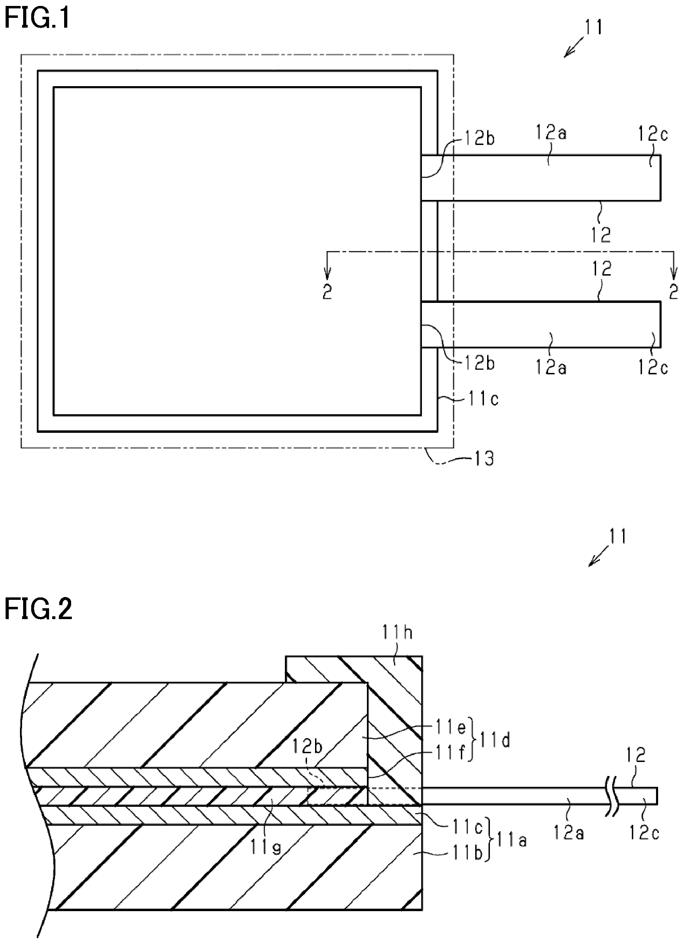

A light control sheet 11 has a first surface and a second surface opposite to the first surface. The first surface and the second surface each extend along the direction in which the light control sheet 11 extends. Fig. 1 illustrates a planar structure of the light control sheet 11 as viewed from the viewpoint opposed to the first surface of the light control sheet 11.

As illustrated in Fig. 1, the light control sheet 11 may have a rectangular outer shape. The light control sheet 11 may include a pair of flexible wiring substrates 12. The pair of flexible wiring substrates 12 may be connected to an outer peripheral section 13 of the light control sheet 11 and disposed on one side of the light control sheet 11. The side on which the flexible wiring substrates 12 are disposed may be a long side of the light control sheet 11 or a short side of the light control sheet 11. The side on which the flexible wiring substrates 12 are disposed may be set on the basis of the disposition of a drive circuit in the light control sheet 11, the shape of a target to which the light control sheet 11 is applied, or the like.

As illustrated in Fig. 2, the light control sheet 11 includes a first transparent electrode film 11a, a second transparent electrode film 11d, a light control layer 11g, and a sealing section 11h. The light control layer 11g is enclosed in a gap between the first transparent electrode film 11a and the second transparent electrode film 11d. The sealing section 11h seals the gap between the first transparent electrode film 11a and the second transparent electrode film 11d in the outer peripheral section 13 of the light control sheet 11. The light control layer 11g is enclosed in the gap surrounded by the sealing section 11h.

The light control layer 11g includes a transparent polymer layer and a liquid crystal composition. The transparent polymer layer defines voids that are filled with the liquid crystal composition. The voids in the transparent polymer layer are filled with the liquid crystal composition. The voids defined by the transparent polymer layer scatter visible light entering the light control layer 11g due to the difference between the refractive index of the transparent polymer layer and the refractive index of the liquid crystal composition, thereby making the light control layer 11g turbid.

The retention type of the liquid crystal composition is any one selected from the group of a polymer dispersion type, a polymer network type, and a capsule type. In the polymer dispersion type, the transparent polymer layer has a large number of isolated voids therein and holds liquid crystal compositions in the voids dispersed in the polymer layer. In the polymer network type, a transparent polymer network having a three-dimensional mesh shape is included and a liquid crystal composition is held in mesh-shaped voids communicated with each other. The polymer network is an example of the transparent polymer layer. In the capsule type, an encapsulated liquid crystal composition is held in the transparent polymer layer. It is to be noted that the liquid crystal composition may contain a monomer, an oligomer, a dichroic dye, a plasticizer, and the like for forming the transparent polymer layer in addition to a liquid crystal compound. The light control layer 11g may include a spacer for keeping the thickness of the light control layer 11g constant.

The first transparent electrode film 11a includes a first transparent substrate 11b and a first transparent electrode layer 11c. The first transparent substrate 11b supports the first transparent electrode layer 11c. The first transparent substrate 11b includes the first surface included in the surfaces of the light control sheet 11. The second transparent electrode film 11d includes a second transparent substrate 11e and a second transparent electrode layer 11f. The second transparent substrate 11e supports the second transparent electrode layer 11f. The second transparent substrate 11e includes the second surface included in the surfaces of the light control sheet 11.

The first transparent electrode film 11a may include an alignment layer that is disposed between the first transparent electrode layer 11c and the light control layer 11g or may include a hard coat layer that is disposed on the opposite surface to the first transparent electrode layer 11c. The second transparent electrode film 11d may include an alignment layer that is disposed between the second transparent electrode layer 11f and the light control layer 11g or may include a hard coat layer that is disposed on the opposite side of the second transparent substrate 11e to the second transparent electrode layer 11f.

The flexible wiring substrates 12 include extending sections 12a that extend toward the outside of the first transparent electrode film 11a and the second transparent electrode film 11d in the planar direction in which the light control sheet 11 extends. One of the pair of flexible wiring substrates 12 is electrically connected to the first transparent electrode layer 11c. The other of the pair of flexible wiring substrates 12 is electrically connected to the second transparent electrode layer 11f. The pair of flexible wiring substrates 12 applies a driving voltage to the light control layer 11g.

In a case where no electric field is formed between the transparent electrode layers 11c and 11f, the light control sheet 11 of a normal type may irregularly arrange the longitudinal directions of liquid crystal compounds to scatter light entering the light control sheet 11, thereby making the light control sheet 11 opaque. In a case where an electric field is formed between the transparent electrode layers 11c and 11f, the light control sheet 11 of the normal type may cause the longitudinal directions of liquid crystal compounds to follow the electric field to cause light entering the light control sheet 11 to pass through the light control sheet 11, thereby making the light control sheet 11 transparent.

In a case where no electric field is formed between the transparent electrode layers 11c and 11f, the light control sheet 11 of a reverse type may cause the longitudinal directions of liquid crystal compounds to follow the regulation force of an alignment layer, thereby making the light control sheet 11 transparent. In a case where an electric field is formed in the transparent electrode layers 11c and 11f, the light control sheet 11 of the reverse type may cause the longitudinal directions of liquid crystal compounds to the follow the electric field to scatter light entering the light control sheet 11, thereby making the light control sheet 11 opaque.

The transparent light control sheet 11 reversibly switches to the opaque light control sheet 11. The first surface of the light control sheet 11 may be adhered to a transparent body such as a window glass, a partition, or a showcase. The first surface of the light control sheet 11 may be adhered to a first transparent plate and the second surface of the light control sheet 11 may be adhered to a second transparent plate, and the light control sheet 11 may be sandwiched between the two transparent plates. The light control sheet 11 may be used as a projection screen.

### [Configuration of Protector 51]

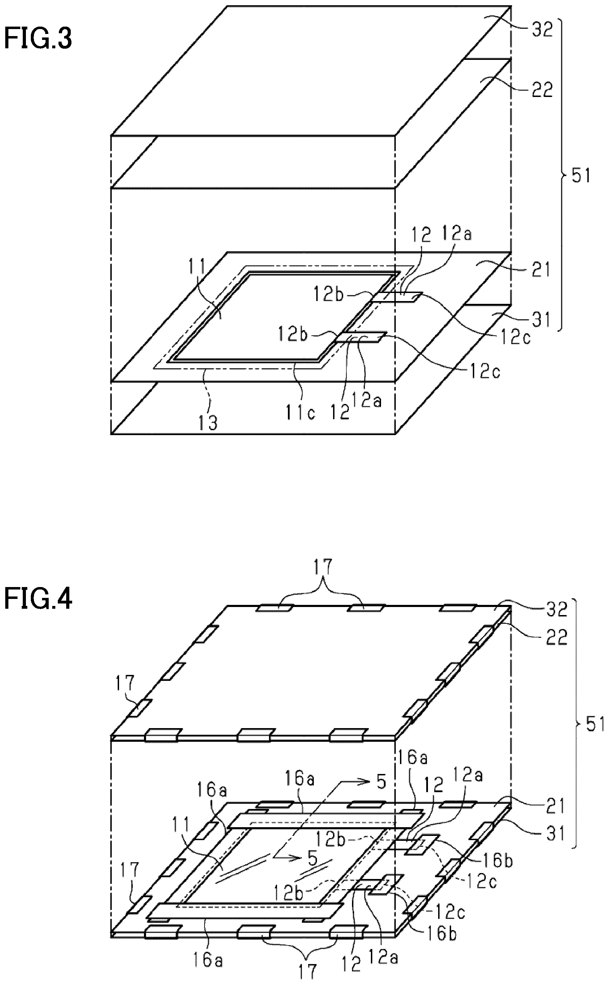

As illustrated in Fig. 3, a protector 51 includes the light control sheet 11, a first protective sheet 21, and a second protective sheet 22. The first protective sheet 21 and the second protective sheet 22 are included in a packaging member.

The size of the first protective sheet 21 is larger than that of the light control sheet 11. As viewed from the viewpoint opposed to the first surface of the light control sheet 11, the outer peripheral section of the first protective sheet 21 protrudes from the light control sheet 11. The size of the second protective sheet 22 is larger than that of the light control sheet 11. As viewed from the viewpoint opposed to the second surface of the light control sheet 11, the outer peripheral section of the second protective sheet 22 protrudes from the light control sheet 11.

Each of the protective sheets 21 and 22 covers the whole of the light control sheet 11. The two protective sheets 21 and 22 sandwich the whole of the light control sheet 11. The first protective sheet 21 comes into contact with the first surface of the light control sheet 11. The first protective sheet 21 protects the whole of the first surface of the light control sheet 11. The second protective sheet 22 comes into contact with the second surface of the light control sheet 11. The second protective sheet 22 protects the whole of the second surface of the light control sheet 11. Each of the protective sheets 21 and 22 may include an adhesive layer having easy-peel properties with respect to the light control sheet 11 but does not have to have adhesiveness to the light control sheet 11.

The protector 51 includes a first protective plate 31 and a second protective plate 32. The first protective plate 31 and the second protective plate 32 are included in the packaging member.

The first protective plate 31 is larger than the light control sheet 11. As viewed from the viewpoint opposed to the first surface of the light control sheet 11, the outer peripheral section of the first protective plate 31 protrudes from the light control sheet 11. The outer peripheral section of the first protective plate 31 may protrude from the first protective sheet 21 but does not have to protrude from the first protective sheet 21. The first protective plate 31 comes into contact with the first protective sheet 21.

The second protective plate 32 is larger than the light control sheet 11. As viewed from the viewpoint opposed to the second surface of the light control sheet 11, the outer peripheral section of the second protective plate 32 protrudes from the light control sheet 11. The outer peripheral section of the second protective plate 32 may protrude from the second protective sheet 22 but does not have to protrude from the second protective sheet 22. The second protective plate 32 comes into contact with the second protective sheet 22.

The two protective plates 31 and 32 sandwich the two protective sheets 21 and 22. The two protective plates 31 and 32 cover the whole of the light control sheet 11. The two protective plates 31 and 32 sandwich the whole of the light control sheet 11. The first protective plate 31 protects the whole of the first surface of the light control sheet 11. The second protective plate 32 protects the whole of the second surface of the light control sheet 11.

The first protective plate 31, the second protective plate 32, and the plurality of sheets that is sandwiched between the two protective plates 31 and 32 are included in the protector 51. The plurality of sheets include the first protective sheet 21, the light control sheet 11, and the second protective sheet 22.

In a case where the light control sheet 11 is required to have reduced friction on the surfaces, it is preferable that each of the protective sheets 21 and 22 have elasticity. In a case where local pressure on the light control sheet 11 is required to be restrained, it is preferable that each of the protective sheets 21 and 22 have elasticity. Each of the protective sheets 21 and 22 may be a foamed sheet. The foamed sheet is a cushioning material including closed cells and having elasticity.

In a case where the protector 51 is required to weigh less and be high in strength, it is preferable that each of the protective plates 31 and 32 be light and high in strength. Each of the protective plates 31 and 32 may be a plate-shaped corrugated board having a bi-wall (registered trademark) structure and having a thickness of 10 mm or more. The bi-wall (registered trademark) structure is the structure of a plate-shaped corrugated board reinforced by sticking two corrugated boards together. Each of the protective plates 31 and 32 may be a plastic corrugated board.

Each of the protective plates 31 and 32 may have a rectangular shape. The respective protective plates 31 and 32 each having a rectangular shape make the protector 51 easier to handle in packaging and transportation. The corner portions of each of the protective plates 31 and 32 may be rounded or chamfered at 45°.

As illustrated in Fig. 4, a plurality of portions of the first protective sheet 21 is each fixed to the first protective plate 31 by an adhesive tape 17 in a peelable manner. Fig. 4 illustrates an example in which the size of the first protective plate 31 and the size of the first protective sheet 21 are the same.

A plurality of portions of the first protective plate 31 in the outer peripheral section is each fixed to one of the surfaces of the first protective sheet 21 in the outer peripheral section by the adhesive tape 17. The adhesive tape 17 has easy-peel properties. The adhesive tape 17 restrains the first protective sheet 21 from being displaced with respect to the first protective plate 31. The adhesive tape 17 is easy to remove from the first protective plate 31 and the first protective sheet 21.

The surface of the first protective plate 31 in the outer peripheral section that is opposed to the first protective sheet 21 and the surface of the first protective sheet 21 in the outer peripheral section that is opposed to the first protective plate 31 may be fixed to each other by an adhesive tape including adhesive layers on both sides. The surface of the first protective plate 31 and the surface of the first protective sheet 21 may be fixed to each other by an adhesive tape including adhesive layers on both sides inside the outer peripheral section of the first protective plate 31 and inside the outer peripheral section of the first protective sheet 21. It is preferable that the portion of the first protective sheet 21 fixed to the first protective plate 31 be located outside the light control sheet 11. This restrains the light control sheet 11 from being displaced with respect to the first protective plate 31.

The outer peripheral section of the first protective plate 31 may protrude from the outer peripheral section of the first protective sheet 21. A plurality of portions of the first protective sheet 21 in the outer peripheral section may be each fixed to the surface of the first protective plate 31 by the adhesive tape 17 including an adhesive layer on one of the sides.

When the first protective plate 31 has a rectangular shape, two or more portions of the first protective sheet 21 may be fixed to one side of the first protective plate 31. It may be changed as appropriate depending on the size of the first protective plate 31 at how many portions the first protective sheet 21 is fixed to the first protective plate 31.

A plurality of portions of the second protective plate 32 is each fixed to the second protective sheet 22 by the adhesive tape 17 in a peelable manner. Fig. 4 illustrates an example in which the size of the second protective plate 32 and the size of the second protective sheet 22 are the same. A plurality of portions of the second protective plate 32 in the outer peripheral section is fixed to one of the surfaces of the second protective sheet 22 in the outer peripheral section by the adhesive tapes 17. This restrains the second protective sheet 22 from being displaced with respect to the second protective plate 32.

The surface of the second protective plate 32 in the outer peripheral section that is opposed to the second protective sheet 22 and the surface of the second protective sheet 22 in the outer peripheral section that is opposed to the second protective plate 32 may be fixed to each other by an adhesive tape including adhesive layers on both sides. The surface of the second protective plate 32 and the surface of the second protective sheet 22 may be fixed to each other by an adhesive tape including adhesive layers on both sides inside the outer peripheral section of the second protective plate 32 and inside the outer peripheral section of the second protective sheet 22. It is preferable that the portion of the second protective sheet 22 fixed to the second protective plate 32 be located outside the light control sheet 11. This restrains the light control sheet 11 from being displaced with respect to the second protective plate 32.

The outer peripheral section of the second protective plate 32 may protrude from the outer peripheral section of the second protective sheet 22. A plurality of portions of the second protective sheet 22 in the outer peripheral section may be each fixed to the surface of the first protective plate 31 by the adhesive tape 17 including an adhesive layer on one of the sides.

When the second protective plate 32 has a rectangular shape, two or more portions of the second protective sheet 22 may be fixed to one side of the second protective plate 32. It may be changed as appropriate depending on the size of the second protective plate 32 at how many sections the second protective sheet 22 is fixed to the second protective plate 32.

The protector 51 includes a first easy-peel tape 16a.

The first easy-peel tape 16a covers the whole of the sealing section 11h and fixes the light control sheet 11 to the first protective sheet 21. The first easy-peel tape 16a covers the whole of the outer peripheral section 13 of the light control sheet 11.

The respective sides of the light control sheet 11 may be fixed to the first protective sheet 21 by different first easy-peel tapes 16a or may be fixed to the first protective sheet 21 by one first easy-peel tape 16a. The first easy-peel tape 16a has adhesion per unit adhesion area such that the adhesive component of the first easy-peel tape 16a will remain on the substrate of the first easy-peel tape 16a and the adhesive component of the first easy-peel tape 16a is unlikely to remain on the surface of the light control sheet 11 when the protector 51 is unpackaged.

Some of the first easy-peel tapes 16a may fix proximal end sections 12b of the extending sections 12a of the flexible wiring substrates 12 to the first protective sheet 21. Of the first easy-peel tapes 16a on the four sides, the first easy-peel tape 16a on one of the sides may fix the proximal end sections 12b of the extending sections 12a of the flexible wiring substrates 12 to the first protective sheet 21.

The protector 51 includes a second easy-peel tape 16b. The second easy-peel tape 16b fixes a distal end section 12c of the extending section 12a of each of the flexible wiring substrates 12 to the first protective sheet 21.

The distal end sections 12c of the respective flexible wiring substrates 12 may be fixed to the first protective sheet 21 by different second easy-peel tapes 16b or may be fixed to the first protective sheet 21 by one second easy-peel tape 16b. The second easy-peel tape 16b has such adhesion per unit adhesion area that leaves the adhesive component of the second easy-peel tape 16b on the substrate of the second easy-peel tape 16b and is unlikely to leave the adhesive component of the second easy-peel tape 16b on the surface of the flexible wiring substrate 12 when the protector 51 is unpackaged.

An easy-peel tape that fixes the proximal end sections 12b of the flexible wiring substrates 12 to the first protective sheet 21 may be different from the second easy-peel tape 16b that fixes the distal end sections 12c to the first protective sheet 21.

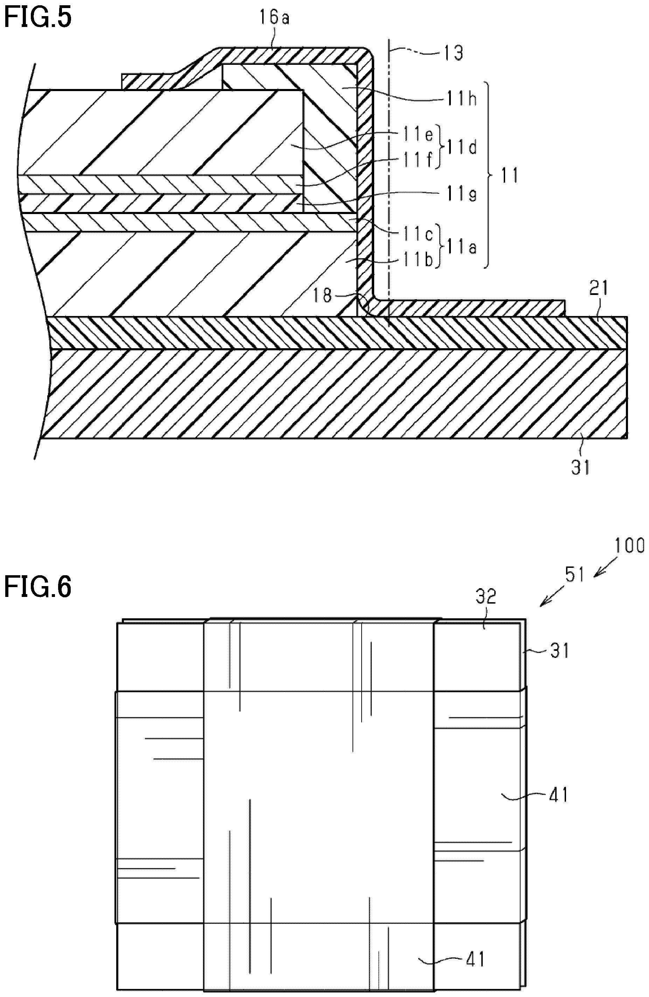

As illustrated in Fig. 5, an end face of the light control sheet 11 in the outer peripheral section 13 includes an end face of the sealing section 11h. The adhesive side of the first easy-peel tape 16a may come into close contact with an adhering surface that is the end face of the sealing section 11h. The adhesive side of the first easy-peel tape 16a may come into close contact with an adhering surface that is the end face of the first transparent electrode film 11a. The adhesive side of the first easy-peel tape 16a comes into close contact with an adhering surface that is the surface of the first protective sheet 21. An instrument such as a squeegee may be used to bond the first easy-peel tape 16a. The squeegee is an elastic member such as a plastic or a rubber. To bond the first easy-peel tape 16a, the first easy-peel tape 16a is pushed against the end face of the light control sheet 11, thereby pushing out and removing the air remaining between the adhesive side and the adhering surface from between the adhesive side and the adhering surface.

The air remaining between the adhesive side and the adhering surface decreases the adhesion area by the presence of the air in between and decreases the adhesion between the adhesive side and the adhering surface. The air remaining between the adhesive side and the adhering surface is pushed out to increase the adhesion area of the first easy-peel tape 16a. This increases the adhesion between the sealing section 11h and the first easy-peel tape 16a, the adhesion between the first transparent electrode film 11a and the first easy-peel tape 16a, and the adhesion between the first protective sheet 21 and the first easy-peel tape 16a. The adhesive side of the first easy-peel tape 16a is brought into close contact with even a corner section 18 by an instrument such as a squeegee. The corner section 18 is formed by the end face of the first transparent electrode film 11a and the surface of the first protective sheet 21.

The four first easy-peel tape 16a cover the whole of the outer peripheral section 13 of the light control sheet 11. The first easy-peel tapes 16a cover the whole of the light control sheet 11 in the outer peripheral section 13 to align with the end face shape of the light control sheet 11 in the outer peripheral section 13. The above-described fixation method that increases the adhesion area of each of the first easy-peel tapes 16a restrains the light control sheet 11 from being displaced with respect to the first protective sheet 21. The first easy-peel tape 16a that is low in adhesion per unit adhesion area has larger adhesion area to fix the light control sheet 11 to the first protective sheet 21.

It is preferable that the first easy-peel tape 16a have great width to increase the area of adhesion to the first protective sheet 21. For example, a masking tape having a width dimension of 30 mm is used. However, it is difficult for the width of an easy-peel tape alone to offer the sufficient area of the adhesion of the first easy-peel tape 16a to the sealing section 11h. It is preferable that the first easy-peel tapes 16a cover the whole of the light control sheet 11 in the outer peripheral section 13 to comply with the end face shape of the light control sheet 11 in the outer peripheral section 13 even when easy-peel tapes each having great width are used.

It is preferable that the two protective plates 31 and 32 be fixed to each other in the protector 51 by the adhesive tapes 17. For example, it is preferable that the outer peripheral section of the first protective plate 31 and the outer peripheral section of the second protective plate 32 be fixed to each other on the four sides by using the adhesive tape 17 at at least one portion for one side. This allows the protector 51 to be handled as an integrated object and makes it unlikely that the surface of the second protective sheet 22 has friction on the surface of the light control sheet 11.

### [Configuration of Packaging Body]

As illustrated in Fig. 6, a packaging body 100 includes the protector 51. A stretch film 41 is wound around the packaging body 100 to press the second protective plate 32 against the first protective plate 31 in the protector 51. The stretch films 41 is wound around the protector 51 twice or more in each of directions orthogonal to each other such as the longitudinal direction and the lateral direction. The stretch film 41 wound twice or more establishes close contact between the wound stretch films 41 and the stretch film 41 is thus restrained from being loose.

It is preferable that each of the protective plates 31 and 32 be deformable in the thickness direction in a case where the protection of the quality of the light control sheet 11 is further required. The surface shapes of the respective protective plates 31 and 32 follow the surface shapes of the light control sheet 11 for the deformation of the respective protective plates 31 and 32 in the thickness direction. The deformation of each of the protective plates 31 and 32 restrains the deformation of the light control sheet 11 and restrains the displacement of the light control sheet 11 with respect to each of the protective plates 31 and 32 in the planar direction.

It is to be noted that the corners of the packaging body 100 having a rectangular shape are relatively weak to impact among the end faces of the packaging body 100. It is preferable to stick plastic tapes on the four corners of the packaging body 100 and crimp plastic tapes and the four corners for fixation. The deformation of the corners is restrained when impact is applied to the corners of the packaging body 100 at the time of transportation. The four corners are crimped with plastic tapes to more firmly fix the position of the second protective plate 32 with respect to the first protective plate 31.

It is preferable to cover the whole of the outermost peripheral section of the packaging body 100 with an air bubble cushioning material. The air bubble cushioning material is, for example, a sheet such as a bubble wrap (registered trademark) or an air cap (registered trademark) molded by confining air in a columnar protrusion. The air bubble cushioning material reduces impact applied to the light control sheet 11 at the time of transportation. It is preferable that the whole of the protector 51 be covered twice with the air bubble cushioning material in the packaging body 100.

### [Method for Manufacturing Packaging Body]

A method for manufacturing the packaging body 100 will be described. The packaging body 100 is manufactured in the following work procedure.
(a) The first protective plate 31 having a size that is larger by 10 cm or more in length and width than the size of the light control sheet 11 is disposed on a workbench. The first protective sheet 21 having the same size as that of the first protective plate 31 is overlaid on the first protective plate 31. The first protective sheet 21 is fixed to the first protective plate 31 by the adhesive tapes 17 at eight or more portions.
(b) The light control sheet 11 disposed with the side on which a product label is stuck facing up is disposed in the middle of the first protective sheet 21. The whole of the light control sheet 11 in the outer peripheral section 13 including the corners is fixed to the first protective sheet 21 by the first easy-peel tape 16a.
(c) The adhesive side of the first easy-peel tape 16a is brought into close contact with the outer peripheral section 13 by an instrument such as a squeegee to follow the end face shape of the light control sheet 11 in the outer peripheral section 13. The proximal end section 12b and the distal end section 12c of each of the flexible wiring substrates 12 are each fixed by the second easy-peel tape 16b.
(d) The second protective sheet 22 having the same size as that of the first protective sheet 21 is overlaid on the light control sheet 11. The second protective plate 32 having the same size as that of the second protective sheet 22 is overlaid on the second protective sheet 22. The second protective plate 32 is fixed to the second protective sheet 22 by the adhesive tapes 17 at eight or more portions.
(e) Each of the protective plates 31 and 32 is fixed by the adhesive tapes 17 at four or more portions. A label seal indicating that the product is packaged is adhered to the upper surface of the second protective plate 32.
(f) The stretch film 41 is wound around the first protective plate 31, the second protective plate 32, and the plurality of sheets between the respective protective plates 31 and 32 twice or more in each of the longitudinal direction and the lateral direction. Plastic tapes are adhered to the four corners. The first protective plate 31 is crimped to the plurality of sheets and the plurality of sheets is crimped to the second protective plate 32. The whole of the protector 51 is covered twice with the air bubble cushioning material. Finally, a label seal indicating that the product is packaged is adhered to the packaging body 100 and the packaging operation ends.

### [Functions]

The whole of the outer peripheral section 13 of the light control sheet 11 is fixed to the first protective sheet 21. This makes it unlikely that the sealing section 11h is displaced with respect to the first protective sheet 21. The first protective sheet 21 is fixed to the first protective plate 31. This makes it unlikely that the first protective sheet 21 is displaced with respect to the first protective plate 31. The second protective sheet 22 is fixed to the second protective plate 32. This makes it unlikely that the second protective sheet 22 is displaced with respect to the second protective plate 32. The first protective plate 31 is then fixed to the second protective plate 32 to form the protector 51. This restrains the second protective plate 32 from being displaced with respect to the first protective plate 31. In the protector 51, the friction of the sealing section 11h caused by the displacement of the sealing section 11h is restrained.

The protector 51 uses the stretch film 41 to apply pressure in the thickness direction of the light control sheet 11. Each of the protective plates 31 and 32 included in the protector 51 is deformed along the surface shape of the light control sheet 11 by the pressure. This restrains the displacement of the sealing section 11h caused by vibration inside the protector 51. At this time, the deformation of the respective protective sheets 21 and 22, the peeling of the easy-peel tapes 16a and 16b, and the like by the pressure applied to the light control sheet 11 are restrained. This restrains the friction of the sealing section 11h caused by the displacement of the light control sheet 11.

In particular, when a packaging body 101 is vertically loaded at the time of the transportation of the packaging body 101, vibration along the planar direction of the light control sheet 11 that is the direction of gravity displaces the light control sheet 11 in the planar direction. The vertical loading is a state in which the packaging body 101 is transported with the surfaces of the light control sheet 11 located in the vertical direction. Meanwhile, when pressure is applied in the thickness direction of the light control sheet 11, the light control sheet 11 is unlikely to be displaced in the direction of gravity with respect to the respective protective plates 31 and 32. Whichever direction the loading direction is at the time of transportation, the light control sheet 11 is unlikely to be displaced. This restrains the friction of the sealing section 11h. The quality of the light control sheet 11 such as aesthetic quality required from the appearance of the light control sheet 11 or durability required from the light control sheet 11 is protected by restraining the friction of the surfaces of the light control sheet 11. The quality of the light control sheet 11 such as the sealing performance of a liquid crystal compound required from the sealing section 11h or cleanliness required from the appearance of the sealing section 11h is protected by restraining the friction of the sealing section 11h.

According to the first embodiment, effects listed below are obtained.
(1-1) Both surfaces of the light control sheet 11 are protected from friction caused by vibration at the time of transportation. This restrains the occurrence of scratches caused by the friction. In addition, a decrease in the performance of the sealing section 11h caused by the sealing section 11h peeling off from the light control sheet 11 is restrained.
(1-2) The area of contact between the first easy-peel tape 16a and the outer peripheral section 13 is large and the first easy-peel tape 16a thus has greater adhesive strength. This restrains the sealing section 11h from being displaced with respect to the first protective sheet 21.
(1-3) The first easy-peel tape 16a fixes the proximal end section 12b of each of the extending sections 12a to the first protective sheet 21. The second easy-peel tape 16b fixes the distal end section 12c of each of the extending sections 12a to the first protective sheet 21. This makes it unlikely that each of the flexible wiring substrates 12 will become displaced in the planar direction with respect to the first transparent electrode film 11a and the first protective sheet 21. As a result, stress applied to the joint portion between the first transparent electrode film 11a and the flexible wiring substrate 12 is restrained.
(1-4) The first easy-peel tape 16a fixes the proximal end section 12b of each of the extending sections 12a to the first protective sheet 21. The second easy-peel tape 16b fixes the distal end section 12c of each of the extending sections 12a to the first protective sheet 21. This makes it unlikely that each of the flexible wiring substrates 12 will become displaced with respect to the second transparent electrode film 11d and the first protective sheet 21. As a result, stress applied to the joint portion between the second transparent electrode film 11d and the flexible wiring substrate 12 is restrained.
(1-5) The first protective plate 31 and the first protective sheet 21 are fixed by the adhesive tapes 17 at a plurality of portions. The second protective plate 32 and the second protective sheet 22 are fixed by the adhesive tapes 17 at a plurality of portions. This makes it unlikely that the first protective sheet 21 is displaced in the planar direction with respect to the first protective plate 31. The second protective sheet 22 is unlikely to be displaced in the planar direction with respect to the second protective plate 32. This restrains the light control sheet 11 from having a lower position along with the first protective sheet 21 and restrains the light control sheet 11 from having a lower position along with the second protective sheet 22 due to vibration at the time of the transportation of the light control sheet 11 with the surfaces facing the vertical direction.
(1-6) The stretch film 41 is wound around the packaging body 100 to press the second protective plate 32 against the first protective plate 31. The stretch film 41 applies pressure to the packaging body 100 from the direction vertical to the surfaces of the light control sheet 11 sandwiched by the two protective plates 31 and 32. This further restrains the displacement of the light control sheet 11 in the planar direction.

### (Second Embodiment)

A configuration of the packaging body 101 for a light control sheet that is a form used to transport or store the plurality of light control sheets 11 will be described. The following chiefly describes components of the packaging body 101 that are different from those of the packaging body 100 and will omit description overlapping with the description of the packaging body 100.

### [Configuration of Packaging Body]

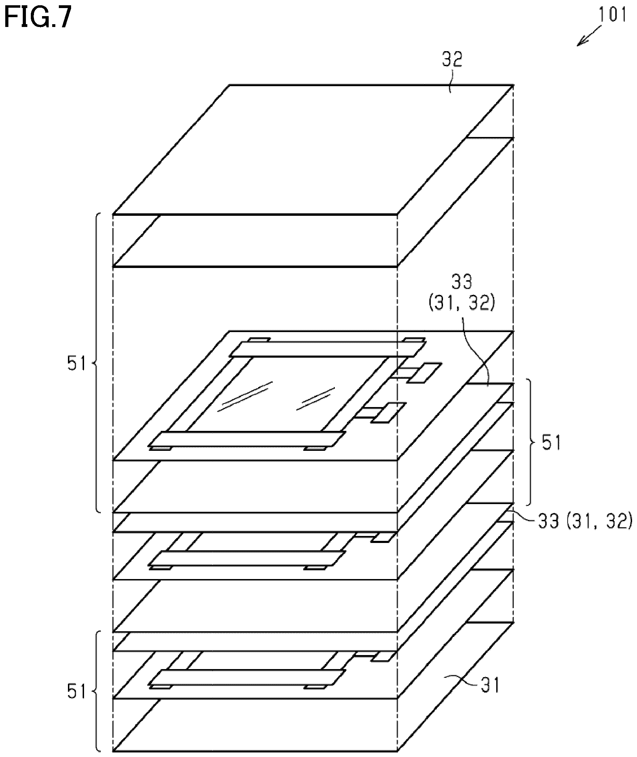

As illustrated in Fig. 7, the first protective plate 31, the second protective plate 32, and the plurality of sheets that is sandwiched between the respective protective plates 31 and 32 are included in one protector 51. The plurality of sheets includes the first protective sheet 21, the light control sheet 11, and the second protective sheet 22.

The packaging body 101 includes the plurality of stacked protectors 51. The first protective plate 31 in one of the protectors 51 next to each other is the second protective plate 32 in the other protector 51. In other words, the packaging body 101 includes the first protective plate 31, the second protective plate 32, and a plurality of third protective plates 33. In the protector 51 that includes the third protective plate 33 as an upper protective plate, the third protective plate 33 is the second protective plate 32. In the protector 51 that includes the third protective plate 33 as a lower protective plate, the third protective plate 33 is the first protective plate 31.

As illustrated in Fig. 6, the stretch film 41 is wound around the packaging body 101 to press the second protective plate 32 against the first protective plate 31 in the plurality of stacked protectors 51. The stretch film 41 is wound around the plurality of stacked protectors 51 twice or more, for example, in each of the longitudinal direction and the lateral direction and the plurality of stacked protectors 51 is fixed.

It is preferable that the first protective plate 31, the second protective plate 32, and each of the third protective plates 33 be deformable in the thickness direction when the stretch film 41 is wound therearound. The surface shapes of the first protective plate 31, the second protective plate 32, and the third protective plate 33 follow the surface shapes of the light control sheet 11 for the deformation of the first protective plate 31, the second protective plate 32, and the third protective plate 33 in the thickness direction. This makes it possible to restrain the light control sheet 11 from being deformed in the thickness direction. In addition, the displacement of the light control sheet 11 with respect to the first protective plate 31, the second protective plate 32, and the third protective plate 33 is restrained in the planar direction.

The third protective plates 33 that are larger than the respective protective plates 31 and 32 in number are thinner than the respective protective plates 31 and 32. This decreases the whole of the packaging body 101 in thickness. It is possible to package a larger number of protectors 51 while keeping the packaging body 101 thin.

### [Method for Manufacturing Packaging Body]

Next, a method for manufacturing the packaging body 101 will be described.

The packaging body 101 is manufactured in the following work procedure.
(a) The first protective plate 31 having a size that is larger by 10 cm or more in length and width than the size of the light control sheet 11 is disposed on a workbench. The first protective sheet 21 having the same size as that of the first protective plate 31 is overlaid on the first protective plate 31. The first protective sheet 21 is fixed to the first protective plate 31 by the adhesive tapes 17 at eight or more portions.
(b) The light control sheet 11 disposed with the side on which a product label is adhered facing up is disposed in the middle of the first protective sheet 21. The whole of the light control sheet 11 in the outer peripheral section 13 including the corners is fixed to the first protective sheet 21 by the first easy-peel tape 16a.
(c) The adhesive side of the first easy-peel tape 16a is brought into close contact with the outer peripheral section 13 by an instrument such as a squeegee to follow the end face shape of the light control sheet 11 in the outer peripheral section 13. The proximal end section 12b and the distal end section 12c of each of the flexible wiring substrates 12 are each fixed by the second easy-peel tape 16b.
(d) The second protective sheet 22 having the same size as that of the first protective sheet 21 is overlaid on the light control sheet 11. The third protective plate 33 having the same size as that of the second protective sheet 22 is overlaid on the second protective sheet 22. The third protective plate 33 is fixed to the second protective sheet 22 by the adhesive tapes 17 at eight or more portions.
(e) The first protective sheet 21 having the same size as that of the third protective plate 33 is overlaid on the third protective plate 33. The first protective sheet 21 is fixed to the third protective plate 33 by the adhesive tapes 17 at eight or more portions.
(f) The light control sheet 11 disposed with the side on which a product label is stuck facing up is disposed in the middle of the first protective sheet 21. The whole of the light control sheet 11 in the outer peripheral section 13 including the corners is fixed to the first protective sheet 21 by the first easy-peel tape 16a.
(g) The adhesive side of the first easy-peel tape 16a is brought into close contact with the outer peripheral section 13 by an instrument such as a squeegee to follow the end face shape of the light control sheet 11 in the outer peripheral section 13. The proximal end section 12b and the distal end section 12c of each of the flexible wiring substrates 12 are each fixed to first protective sheet 21 by the second easy-peel tape 16b.
(h) The operations of (d) to (g) are repeated until the light control sheets 11 to be packaged are all stacked. It is to be noted that, when the packaging body 101 increases in thickness, the packaging body 101 around which the stretch film 41 is wound has an unstable shape. It is preferable that the number of light control sheets 11 to be packaged in one packaging body 101 be ten or less.
(i) When the light control sheets 11 to be packaged are all stacked, the second protective sheet 22 having the same size as that of the first protective sheet 21 is overlaid on the light control sheet 11. The second protective plate 32 having the same size as that of the second protective sheet 22 is disposed on the second protective sheet 22. The second protective plate 32 is fixed to the second protective sheet 22 by the adhesive tapes 17 at eight or more portions.
(j) The first protective plate 31 is fixed to the second protective plate 32 by the adhesive tapes 17 at four or more portions. A label seal indicating that the product is packaged is adhered to the upper surface of the second protective plate 32.
(k) The stretch film 41 is wound around the first protective plate 31, the second protective plate 32, and the plurality of sheets between the two protective plates 31 and 32 twice or more in each of the longitudinal direction and the lateral direction. A plurality of sheets is fixed to the first protective plate 31 and the second protective plate 32. Plastic tapes are adhered to the four corners. The first protective plate 31 is crimped to the plurality of sheets and the plurality of sheets is crimped to the second protective plate 32. The whole of the protector 51 is covered twice with the air bubble cushioning material. Finally, a label seal indicating that the product is packaged is adhered to the packaging body 101 and the packaging operation ends.

### [Functions]

Next, the functions of the present embodiment will be described.

The whole of the outer peripheral section 13 of the light control sheet 11 is fixed to the first protective sheet 21. This restrains the sealing section 11h from being displaced in the light control sheet 11 with respect to the first protective sheet 21. The first protective sheet 21 is fixed to the first protective plate 31. This restrains the first protective sheet 21 from being displaced with respect to the first protective plate 31. The first protective plate 31 is fixed to the second protective plate 32 of the other protector 51. The plurality of protectors 51 is thus formed. This restrains the second protective plate 32 from being displaced with respect to the first protective plate 31 in the plurality of protectors 51.

The plurality of protectors 51 each uses the stretch film 41 to apply pressure in the thickness direction of the light control sheets 11. The first protective plate 31, the second protective plate 32, and the third protective plates 33 included in the plurality of protectors 51 are deformed along the surface shapes of the light control sheets 11 by the pressure. This restrains the displacement of the sealing section 11h in the light control sheet 11 caused by vibration inside each of the protectors 51.

In particular, when the packaging body 101 is vertically loaded at the time of the transportation of the packaging body 101, vibration in the planar direction of the light control sheets 11 that is the direction of gravity displaces the light control sheets 11 in the planar direction. The vertical loading is a state in which the packaging body 101 is transported with the surfaces of each of the light control sheets 11 located in the vertical direction. Meanwhile, the application of pressure in the thickness direction of the light control sheets 11 makes it unlikely that the light control sheets 11 are displaced in the direction of gravity with respect to the respective protective plates 31 and 32. That is, whichever direction the loading direction is at the time of transportation, the light control sheets 11 are unlikely to be displaced. This restrains the friction of the sealing sections 11h.

In addition, plastic tapes are crimped to the four corners to collectively fix the corners of the first protective plate 31, the second protective plate 32, and the plurality of third protective plates 33. As the positional relationship between the light control sheets 11 in the protectors 51 next to each other, the light control sheets 11 are unlikely to be displaced in the planar direction. This restrains the friction of the sealing sections 11h.

According to the second embodiment, effects listed below are obtained.
(2-1) Both surfaces of each of the light control sheets 11 are protected from friction caused by vibration at the time of transportation. This makes it possible to restrain the light control sheet 11 from suffering scratching and damage, and restrains decrease in the performance of the sealing section 11h caused by the sealing section 11h being peeled off from the light control sheet 11.
(2-2) The first protective plate 31, the second protective plate 32, and the plurality of sheets that is sandwiched between two protective plates 31 and 32 are included in one protector 51. The packaging body 101 may include the plurality of stacked protectors 51. The first protective plate 31 of one of the protectors 51 next to each other may be the second protective plate 32 of the other protector 51. In a case where the first protective plate 31 of one of the protectors 51 also serves as the second protective plate 32 of the other protector 51, it is possible to decrease the respective protective plates 31 and 32 in number.
(2-3) The third protective plate 33 may be thinner than the respective protective plates 31 and 32. The whole of the packaging body 101 is decreased in thickness by making the third protective plate 33 thinner than the respective protective plates 31 and 32. This makes it possible to package a larger number of protectors 51 in one packaging body 101 while keeping the whole of the packaging body 101 thin. That is, it is possible to package a larger number of light control sheets 11 in one packaging body 101 while keeping the whole of the packaging body 101 thin.

### (Third Embodiment)

A configuration of a packaging body 102 for a light control sheet that is a form used to transport or store the light control sheet 11 will be described. The following chiefly describes components in the packaging body 102 that are different from those of the packaging bodies 100 and 101 and will omit description overlapping with the description of the packaging bodies 100 and 101.

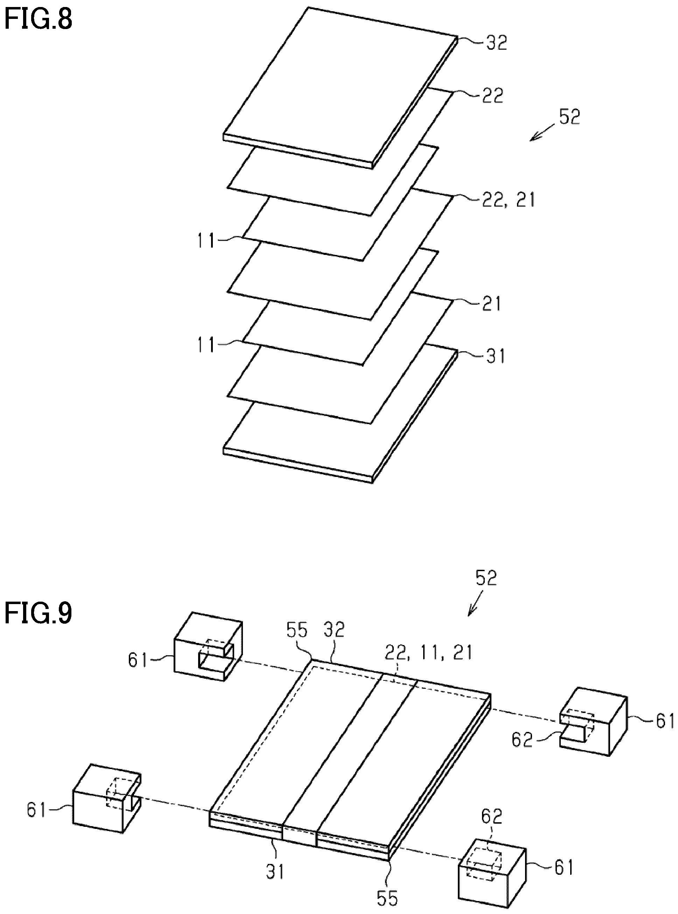

As illustrated in Fig. 8, the first protective plate 31, the second protective plate 32, and the plurality of sheets that is sandwiched between the two protective plates 31 and 32 are included in one pair of protectors 52. The plurality of sheets is the first protective sheets 21, the light control sheets 11, and the second protective sheets 22. One pair of protectors 52 includes the two light control sheets 11. Each of the light control sheets 11 is sandwiched between the first protective sheet 21 and the second protective sheet 22.

It is to be noted that one light control sheet 11 and the other light control sheet 11 may be stacked with one first protective sheet 21 alone in between or may be stacked with one second protective sheet 22 alone in between. One light control sheet 11 and the other light control sheet 11 may be stacked with the two respective protective sheets 21 and 22 in between.

One pair of protectors 52 may include one or three or more light control sheets 11.

A plurality of portions of the first protective sheet 21 may be fixed to the first protective plate 31 by the adhesive tapes 17 in a peelable manner. Alternatively, the adhesive tapes 17 may be omitted and the plurality of portions of the first protective sheet 21 do not have to be fixed to the first protective plate 31. A plurality of portions of the second protective plate 32 may be fixed to the second protective sheet 22 by the adhesive tapes 17 in a peelable manner. Alternatively, the adhesive tapes 17 may be omitted and the plurality of portions of the second protective plate 32 do not have to be fixed to the first protective sheet 31.

The sealing section 11h of each of the light control sheets 11 may be fixed to the first protective sheet 21 by the first easy-peel tape 16a. Alternatively, the first easy-peel tape 16a may be omitted and the sealing section 11h does not have to be fixed to the first protective sheet 21. The extending section 12a of each of the flexible wiring substrates 12 may be fixed to the first protective sheet 21 by the second easy-peel tape 16b. Alternatively, the second easy-peel tape 16b may be omitted and the extending section 12a does not have to be fixed to the first protective sheet 21.

As illustrated in Fig. 9, a stretch film is wound around the protector 52 to press the second protective plate 32 against the first protective plate 31. The packaging body 102 for the light control sheet 11 includes a plurality of cushioning members 61. The protector 52 having the shape of a quadrangular plate includes four corner portions 55 that are corners. The protector 52 includes the cushioning members 61 one by one for the respective corner portions. The corner portion 55 of the protector 52 is a section that is likely to be deformed by stress among the end faces of the protector 52. The cushioning member 61 alleviates the transmission of stress applied toward the protector 52 from the outside to the corner portion 55 of the protector 52.

The cushioning member 61 has a rectangular solid shape. The cushioning member 61 has a slit 62 in the middle of the protector 52 in the thickness direction to allow the corner portion 55 of the protector 52 to be inserted thereto. The slit 62 is partitioned by the cushioning member 61 as a space shaped like a flat plate that complies with the shape of the corner portion 55 of the protector 52. A material included in the cushioning member 61 may be a plate-shaped corrugated board or a foamed resin.

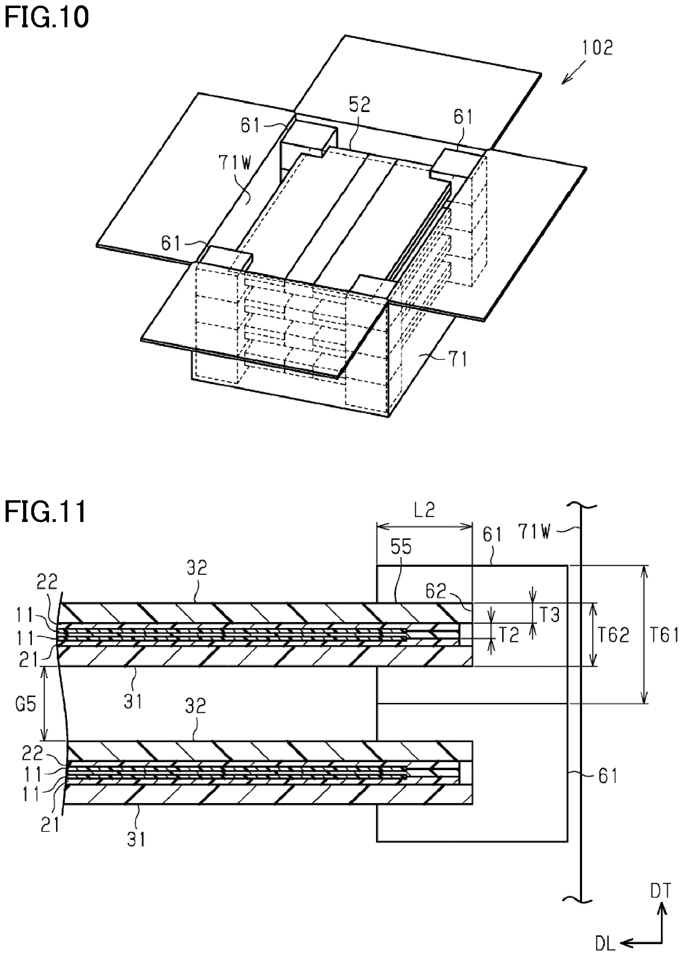

As illustrated in Fig. 10, the packaging body 102 for the light control sheet 11 includes the plurality of pairs of protectors 52, the cushioning members 61, and a packaging box 71. The cushioning members 61 and the packaging box 71 are included in a packaging member.

In the packaging body 102, the plurality of pairs of protectors 52 and the cushioning members 61 are accommodated in one packaging box 71. It is preferable that a material included in the packaging box 71 be light, high in strength, high in durability, and inexpensive. The material included in the packaging box 71 may be a plate-shaped corrugated board. The material included in the packaging box 71 may be a monolayer plate-shaped corrugated board or a plate-shaped corrugated board having a two-layer structure such as a bi-wall (registered trademark). In a case where the packaging box 71 is required to be higher in mechanical strength, it is preferable that the thickness of the plate-shaped corrugated board having the two-layer structure be greater than or equal to 10 mm.

The packaging box 71 may be an A-type corrugated cardboard box including a flap as an upper wall or a B-type corrugated cardboard box including a body and a lid. The plurality of pairs of protectors 52 is stacked inside the packaging box 71 to bring the cushioning members 61 included in the respective pairs of protectors 52 into contact with each other in the up-down direction.

As illustrated in Fig. 11, in one pair of protectors 52, the sum of the thicknesses of the light control sheets 11, the first protective sheet 21, and the second protective sheet 22 in a thickness direction DT of the light control sheets 11 is sheet thickness T2. The thickness of each of the first protective plate 31 and the second protective plate 32 in the thickness direction DT of the light control sheets 11 is plate thickness T3.

The interval of the slit 62 in the thickness direction DT of the light control sheets 11 is slit height T62. The slit height T62 may be equal to, less than, or greater than the sum of the sheet thickness T2 and the two plate thicknesses T3 in one pair of protectors 52. In a case where the slit height T62 is less than the sum of the sheet thickness T2 and the two plate thicknesses T3, the corner portions of the protectors 52 are restrained from being displaced with respect to the slit 62.

An increase in the size of the light control sheet 11 increases the size of the protector 52 itself. As the light control sheet 11 increases in size, the protector 52 is more likely to be deflected by its own weight. In a case where the protector 52 as deflected by the its own weight comes into contact with a structure such as the protector 52 other than the protector 52 deflected by the its own weight or the bottom surface of the packaging box 71, stress or impact is likely to be transmitted to the light control sheet 11 through the contact. Thickness T61 of the cushioning member 61 in the thickness direction DT of the light control sheet 11 may be sufficient to space the protector 52 apart from the bottom surface of the packaging box 71 even in a case where the protector 52 itself is deflected by the its own weight. Further, the thickness T61 of the cushioning member 61 in the thickness direction DT of the light control sheet 11 defines an interval G5 between adj acent protectors 52. The thickness T61 of the cushioning member 61 may be sufficient to keep the protector 52 out of contact with another structure even in a case where the protector 52 itself is deflected by the its own weight. In a case where the protector 52 is required to avoid contact with another structure, it is preferable that the thickness T61 of the cushioning member 61 be greater than or equal to 30 mm. It is more preferable that the thickness T61 of the cushioning member 61 be greater than or equal to 40 mm.

Length L2 of the slit 62 in a planar direction DL of the light control sheet 11 is the length of the protector 52 supported by the cushioning member 61. As the length L2 of the slit 62 increases, the length of the protector 52 supported by the cushioning member 61 increases. This restrains the displacement of the protector 52 with respect to the cushioning member 61, that is, the deflection of the protector 52 by its own weight. In a case where the protector 52 is required to be restrained from being deflected, it is preferable that the length L2 of the slit 62 be 1/20 times or more as great as the length of the protector 52 in the planar direction DL of the light control sheet 11. It is more preferable that the l length L2 of the slit 62 be 1/10 times or more as great as the length of the protector 52 in the planar direction DL of the light control sheet 11.

### [Example]

An Example in which the packaging body 102 according to the third embodiment described above is embodied will be described below.

First, a plastic corrugated board was used for each of the first protective plate 31 and the second protective plate 32 according to the Example. A laminate of a foamed polyethylene sheet (Minaform (registered trademark): manufactured by Sakai Chemical Industry Co., Ltd.) and a plurality of sheets of laminating paper was used for each of the first protective sheet 21 and the second protective sheet 22 according to the Example. Subsequently, one light control sheet 11 was sandwiched by a foamed polyethylene sheet and a plurality of sheets of laminating paper, and a plurality of foamed polyethylene sheets, a plurality of sheets of laminating paper, and two light control sheets 11 were sandwiched by the two protective plates 31 and 32. The protector 52 according to the Example having the shape of a rectangular plate was thus obtained.

Next, a plate-shaped corrugated board having a thickness of 10 mm was used for a material included in the cushioning member 61 to form the cushioning member 61. The cushioning members 61 were attached one by one to the four corner portions 55 of the protector 52 according to the Example and the five protectors 52 were stacked in one packaging box 71 to obtain the packaging body 102 according to the Example. That is, ten light control sheets 11 were accommodated in one packaging box 71 to obtain the packaging body 102 according to the Example. In addition, the packaging body 102 in which the cushioning members 61 were removed from the packaging body 102 according to the Example was obtained as the packaging body 102 according to a reference example.

It is to be noted the dimensions of the packaging box 71, the respective protective plates 31 and 32, the respective protective sheets 21 and 22, and the cushioning member 61 for accommodating the ten light control sheets 11 will be described below. For the dimensions of the packaging box 71 and the dimensions of the cushioning member 61, the longitudinal dimension that is length in the planar direction DL, the lateral dimension that is length in the other planar direction DL, and the height that is length in the thickness direction DT are expressed as the longitudinal dimension × the lateral dimension × the height. For the dimensions of the respective protective plates 31 and 32 and the respective protective sheets 21 and 22, the longitudinal dimension that is length in the planar direction DL and the lateral dimension that is length in the other planar direction DL are expressed as the longitudinal dimension × the lateral dimension.
- The dimensions of the packaging box 71: 1085 mm × 810 mm × 230 mm
- The dimensions of the respective protective plates 31 and 32: 1045 mm × 770 mm
- The plate thickness T3 of each of the protective plates 31 and 32: 4 mm
- The dimensions of the respective protective sheets 21 and 22: 1055 mm × 780 mm
- The thickness of each of the protective sheets 21 and 22: 3.5 mm
- The dimensions of the cushioning member 61: 110 mm × 110 mm × 42 mm
- The thickness T61 of the cushioning member 61: 42 mm
- The length L2 of the slit 62: 90 mm
- The slit height T62: 22 mm

In addition, the number of each of the protective plates 31 and 32, the number of foamed polyethylene sheets, the number of sheets of laminating paper, and the number of cushioning members 61 used to accommodate the ten light control sheets 11 will be described below.
- The number of each of the protective plates 31 and 32: 10 plates
- The number of foamed polyethylene sheets: 10 sheets
- The number of sheets of laminating paper: 45 sheets
- The number of cushioning members 61: 20 members

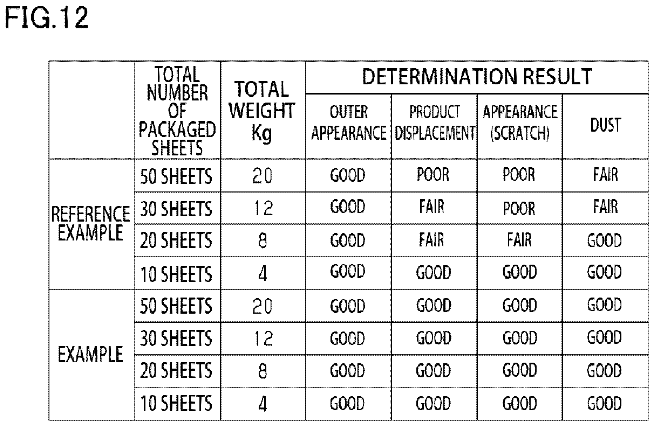

Results of the respective evaluations of vibration tests in which the packaging bodies 102 according to the Example and the reference example were used and vibration tests in which two to five packaging bodies 102 were stacked are illustrated in Fig. 12. In the vibration tests, vibration was performed in each of the vertical direction and the horizontal direction by using a method compliant with JIS Z 0200: 2020 (level 2 in 8.4 vibration test). It was then determined on the basis of the outer appearances of the packaging bodies 102 and the positions of the protectors 52 in the packaging boxes 71 before the vibration tests whether the outer packaging of the packaging body 102 or the protectors 52 were displaced after the vibration tests. In addition, it was determined on the basis of the appearances of the light control sheets 11 before the vibration tests whether the appearances of the light control sheets 11 had any scratches. In addition, it was visually determined whether the inside of each of the packaging boxes 71 after the vibration tests had any dust in comparison with the inside of each of the packaging boxes 71 before the vibration tests.

It is to be noted that in Fig. 12 a sign "Good" denotes the level at which no displacement was recognized for all the packaging boxes 71 and the level at which no displacement was recognized for all the protectors 52. A sign "Fair" denotes the level at which displacement was recognized for only some of the packaging boxes 71 and a sign "Poor" denotes the level at which displacement was recognized for all the packaging boxes 71. A sign "Good" denotes the level at which no scratches were recognized for all the light control sheets 11, a sign "Fair" denotes the level at which scratches were recognized for the half or less of the light control sheets 11, and a sign "Poor" denotes the level at which scratches were recognized for the half or more of the light control sheets 11. A sign "Good" denotes the level at which no dust was visually recognized for all the packaging boxes 71 and a sign "Fair" denotes the level at which dust was visually recognized for some of the packaging boxes 71.

As illustrated in the outer appearance in the determination result in Fig. 12, it is recognized that the outer appearance according to the reference example which does not include the cushioning member 61 does not exhibit displacement of the packaging body 102 within the whole of the numerical range of the ten to fifty light control sheets 11, that is, within the whole of the range of loads of 4 kg to 20 kg. In addition, it is also recognized that the outer appearance according to the Example does not exhibit displacement of the packaging body 102 within the whole of the numerical range of the ten to fifty light control sheets 11.

In contrast, as illustrated in the product displacement in the determination result in Fig. 12, it is recognized that the protector 52 according to the reference example is displaced more as the light control sheets 11 increase from ten to fifty in number. In contrast, it is recognized that the protector 52 according to the Example exhibits no displacement within the whole of the numerical range of ten to fifty light control sheets 11.

As illustrated in the appearance in the determination result in Fig. 12, it is recognized that the light control sheets 11 according to the reference example are more likely to have scratches as the light control sheets 11 increase from ten to fifty in number. In contrast, it is recognized that the light control sheets 11 according to the Example have no scratches within the whole of the numerical range of the ten to fifty light control sheets 11.

As illustrated in the appearance in the determination result in Fig. 12, it is recognized that the light control sheets 11 according to the reference example are more likely to have scratches as the light control sheets 11 increase from ten to fifty in number. In contrast, it is recognized that the light control sheets 11 according to the Example have no scratches within the whole of the numerical range of the ten to fifty light control sheets 11.

As illustrated in the dust in the determination result in Fig. 12, it is recognized that the packaging bodies 102 according to the reference example are more likely to have dust as the light control sheets 11 increase from ten to fifty in number. In contrast, it is recognized that the packaging bodies 102 according to the Example have no dust within the whole of the numerical range of ten to fifty light control sheets 11.

According to the third embodiment described above, effects listed below are obtained.
(3-1) The cushioning member 61 is disposed at an edge of the protector 52 to space the corner portion 55 of the protector 52 apart from an inner surface 71W of the packaging box 71 in the planar direction DL of the light control sheet 11. This reduces stress or impact transmitted to the protector 52 from the packaging box 71 for the protector 52. The reduction in stress or impact transmitted to the protector 52 protects the quality of the light control sheet 11 such as durability that is required from a corner portion of the light control sheet 11 or aesthetic quality that is required from a corner portion of the light control sheet 11. As a result, the packaging body 102 increases in protection performance of the quality of the light control sheet 11.
(3-2) The cushioning member 61 has the slit 62 to which the corner portion 55 of the protector 52 is inserted. The corner portion 55 of the protector 52 is therefore accommodated in the slit 62 of the cushioning member 61 and the corner portion 55 of the protector 52 is covered with the cushioning member 61. This increases the protector 52 in the effectiveness of the protection of the corner portion 55 and eventually increases the effectiveness of the protection of a corner portion of the light control sheet 11.
(3-3) In a case where the slit height T62 is less than the thickness of the protector 52, a corner portion of the protector 52 is unlikely to be displaced with respect to the cushioning member 61. This restrains the light control sheet 11 from having friction or being deformed due to the displacement of the corner portion 55 of the protector 52 with respect to the cushioning member 61.
(3-4) An increase in the size of the light control sheet 11 increases the size of the protector 52 itself. As the light control sheet 11 increases in size, the protector 52 is more likely to be deflected by its own weight. In a case where the protector 52 as deflected by the its own weight comes into contact with a structure other than the protector 52, stress or impact is likely to be transmitted to the light control sheet 11 through the contact. In this regard, the cushioning member 61 is disposed at an edge of the protector 52 to space the protector 52 apart from the inner surface 71W of the packaging box 71 in the thickness direction DT of the light control sheet 11. This reduces stress or impact transmitted to the protector 52 from the packaging box 71 for the protector 52. That is, stress or impact transmitted to the light control sheet 11 from the packaging box 71 is reduced for the light control sheet 11. As a result, the packaging body 102 increases in protection performance of the quality of the light control sheet 11.
(3-5) The cushioning member 61 is disposed at an edge of the protector 52 to space the protector 52 apart from the other protector 52 in the thickness direction DT of the light control sheets 11. This reduces, between one protector 52 and another protector 52, stress or impact transmitted between the two protectors 52. That is, stress or impact is reduced that is transmitted to the light control sheet 11 of one protector 52 from the other protector 52. As a result, the packaging body 102 further increases in the protection performance of the quality of the light control sheet 11.

### [Modification Examples]

Additionally, it is possible to modify and carry out the first embodiment to the third embodiment as follows. In addition, it is possible to carry out the embodiments described above and modification examples in combination with each other within the range that allows technical inconsistency to be avoided.
- The first protective plate 31, the second protective plate 32, and the third protective plate 33 may each have one or more holes in the middle. In spite of the one or more holes in the middle, it is possible to restrain the light control sheet 11 from moving in the planar direction when the stretch film 41 applies pressure.
- The respective protective sheets 21 and 22 may be larger than the first protective plate 31, the second protective plate 32, and the third protective plate 33. For example, the respective protective plates 31, 32, and 33 and the respective protective sheets 21 and 22 are fixed by the adhesive tapes 17 each having adhesive layers on both sides to allow the respective protective sheets 21 and 22 larger than the respective protective plates 31, 32, and 33 to be fixed to the respective protective plates 31, 32, and 33.
- In Fig. 5, the light control sheet 11 may be disposed upside down on the first protective sheet 21. That is, the light control sheet 11 may be disposed with the surface of the light control sheet 11 closer to the sealing section 11h in contact with the surface of the first protective sheet 21. In this state, a part of the sealing section 11h is covered with the first protective sheet 21, but the remaining parts are covered with the first easy-peel tape 16a to prevent any of the parts from being exposed. Therefore, this state is included in a state "the first easy-peel tape 16a covers the whole of the sealing section 11h". That is, the first easy-peel tape 16a covers the whole of the sealing section 11h and fixes the light control sheet 11 to the first protective sheet 21. Further, it is preferable that the first easy-peel tapes 16a cover the whole of the light control sheet 11 in the outer peripheral section 13 to follow the end face shape of the light control sheet 11 in the outer peripheral section 13 even in this state.
- A squeegee may be used for the second easy-peel tape 16b that fixes the distal end section 12c of the extending section 12a of each of the flexible wiring substrates 12 to the first protective sheet 21. That is, the flexible wiring substrate 12 may be fixed to the first protective sheet 21 by the second easy-peel tape 16b such that the outer shape of the flexible wiring substrate 12 is followed. The adhesive strength by the second easy-peel tape 16b increases. This makes it possible to further restrain the flexible wiring substrate 12 from being displaced with respect to the first protective sheet 21.
- In the second embodiment, the protectors 51 according to the first embodiment may be stacked to form the packaging body 101. The configurations of the protectors 51 included in the packaging body 101 are all the same. This makes it possible to manufacture the packaging body 101 in a simple procedure by manufacturing the plurality of protectors 51 having the same configurations, and then piling up the plurality of manufactured protectors 51.
- In the second embodiment, of the plurality of light control sheets 11 to be packaged, the respective light control sheets 11 may be different from each other in size. Of the plurality of light control sheets 11, one light control sheet 11 alone may be different in size or the light control sheets 11 may be all different in size.
- In the third embodiment, the first protective plate 31 may have a cushioning function of protecting the light control sheet 11 for the surface opposed to the light control sheet 11. At this time, the packaging body 102 for the light control sheet 11 may omit the first protective sheet 21. The second protective plate 32 may have a cushioning function of protecting the light control sheet 11 for the surface opposed to the light control sheet 11. At this time, the packaging body 102 for the light control sheet 11 may omit the second protective sheet 22.
- In the third embodiment, the stretch film 41 does not have to be wound around the protector 52.
- The cushioning member 61 may be disposed at any other position than a corner portion among edges of the protector 52. For example, the slit 62 of the cushioning member 61 may have linearity along a long side of the protector 52 and the cushioning member 61 may be provided on a long side of the protector 52 to cause the slit 62 to sandwich a part of the long side of the protector 52. The slit 62 of the cushioning member 61 may have linearity along a short side of the protector 52 and the cushioning member 61 may be provided on a short side of the protector 52 to cause the slit 62 to sandwich a part of the short side of the protector 52.

This disposes the cushioning member 61 on each of the sides of the protector 52 to space the corner portion 55 of the protector 52 apart from the inner surface 71W of the packaging box 71 in the planar direction DL of the light control sheet 11. Even in this configuration, it is possible to obtain effects equivalent to those of (3-1) to (3-3) above. Alternatively, the cushioning member 61 is disposed on each of the sides of the protector 52 to space the protector 52 apart from the inner surface 71W of the packaging box 71 in the thickness direction DT of the light control sheet 11. Even in this configuration, it is possible to obtain the effects equivalent to those of (3-4) and (3-5) above.
- An easy-peel tape may be omitted in the packaging body for the light control sheet. At this time, the protector may include the light control sheet, and the first protective plate and the second protective plate that sandwich the whole of the light control sheet. The packaging member may include the cushioning member that is disposed at an edge of the protector to space a corner portion of the protector apart from an inner surface of the packaging box in the planar direction of the light control sheet.

A corner portion of the protector that sandwiches the light control sheet is a section that is likely to be deformed by stress among the end faces of the protector. In this regard, according to the configuration described above, the cushioning member is disposed at an edge of the protector to space a corner portion of the protector apart from an inner surface of the packaging box. This reduces stress or impact transmitted to the protector from the packaging box for the protector. That is, stress or impact transmitted to the light control sheet from the packaging box is reduced for the light control sheet. As a result, whether the sealing section is fixed to a protective sheet by an easy-peel tape or the sealing section is not fixed to a protective sheet by an easy-peel tape, a decrease in the quality of the light control sheet is restrained that might be caused by stress or impact applied to the protector from the packaging box. The packaging body then increases in the protection performance of the quality of the light control sheet.
- An easy-peel tape may be omitted in the packaging body for the light control sheet. At this time, the protector may include the light control sheet, and the first protective plate and the second protective plate that sandwich the whole of the light control sheet. The packaging body may include the cushioning member that is disposed at an edge of the protector to space the protector apart from an inner surface of the packaging box in the thickness direction of the light control sheet.

An increase in the size of the light control sheet increases the size of the protector itself. As the light control sheet increases in size, the protector is more likely to be deflected by its own weight. In a case where the protector as deflected by the its own weight comes into contact with a structure other than the protector, stress or impact is likely to be transmitted to the light control sheet through the contact.

In this regard, the cushioning member is disposed at an edge of the protector to space the protector apart from the inner surface of the packaging box in the thickness direction of the light control sheet. This reduces stress or impact transmitted to the protector from the packaging box for the protector. That is, stress or impact transmitted to the light control sheet from the packaging box is reduced for the light control sheet. As a result, whether the sealing section is fixed to a protective sheet by an easy-peel tape or the sealing section is not fixed to a protective sheet by an easy-peel tape, a decrease in the quality of the light control sheet is restrained that might be caused by stress or impact applied to the protector from the packaging box. The packaging body then increases in the protection performance of the quality of the light control sheet.

### (Fourth Embodiment)

A packaging body for a light control sheet according to the fourth embodiment includes a wound body 35 obtained by winding one light control sheet 11 around a tubular member 31T.

### [Configuration of Light Control Sheet 11]

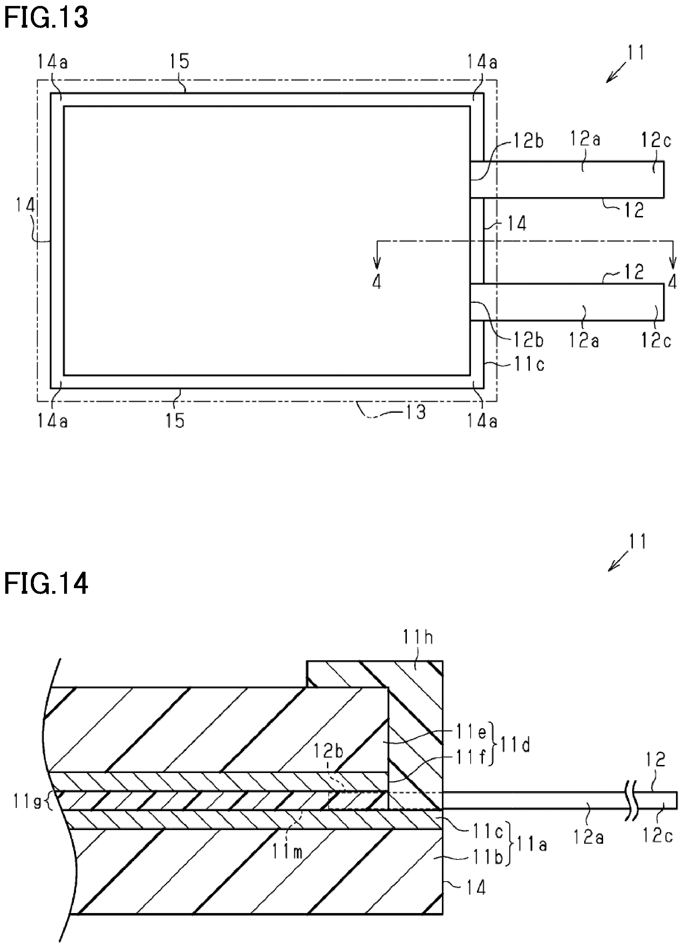

The light control sheet 11 has a first surface and a second surface opposite to the first surface. The first surface and the second surface extend along the direction in which the light control sheet 11 extends. Fig. 13 illustrates a planar structure of the light control sheet 11 as viewed from the viewpoint opposed to the first surface of the light control sheet 11.

As illustrated in Fig. 13, the light control sheet 11 may have a rectangular shape. The light control sheet 11 may have a pair of opposed short sides 14 and a pair of opposed long sides 15. The light control sheet 11 includes the pair of flexible wiring substrates 12. The pair of flexible wiring substrates 12 may be connected to an outer peripheral section 13 of the light control sheet 11 and disposed on the short side 14 of the light control sheet 11.

As illustrated in Fig. 14, the light control sheet 11 includes the first transparent electrode film 11a, the second transparent electrode film 11d, the light control layer 11g containing a liquid crystal composition 11m, and the sealing section 11h. The liquid crystal composition 11m is enclosed between the two transparent electrode films 11a and 11d. The light control layer 11g is sandwiched between the first transparent electrode film 11a and the second transparent electrode film 11d. The sealing section 11h seals the outer peripheral section 13 that is a portion around the region between the first transparent electrode film 11a and the second transparent electrode film 11d.

The first transparent electrode film 11a includes the first transparent substrate 11b and the first transparent electrode layer 11c. The first transparent substrate 11b supports the first transparent electrode layer 11c. The second transparent electrode film 11d includes the second transparent substrate 11e and the second transparent electrode layer 11f. The second transparent substrate 11e supports the second transparent electrode layer 11f.

The flexible wiring substrates 12 each include the extending section 12a that extend to the outside of the first transparent electrode film 11a and the second transparent electrode film 11d from the short side 14 of the first transparent electrode film 11a and the second transparent electrode film 11d. One of the pair of flexible wiring substrates 12 is electrically connected to the first transparent electrode layer 11c. The other of the pair of flexible wiring substrates 12 is electrically connected to the second transparent electrode layer 11f.

The light control layer 11g includes a transparent polymer layer and a liquid crystal composition. The transparent polymer layer defines voids that are filled with the liquid crystal composition. The transparent polymer layer defines voids that are sufficient in number and size to scatter visible light entering the light control layer 11g due to the difference between the refractive index of the transparent polymer layer and the refractive index of the liquid crystal composition, thereby making the light control layer 11g turbid. Voids in the transparent polymer layer are filled with the liquid crystal composition.

### [Configuration of Wound Body 35]

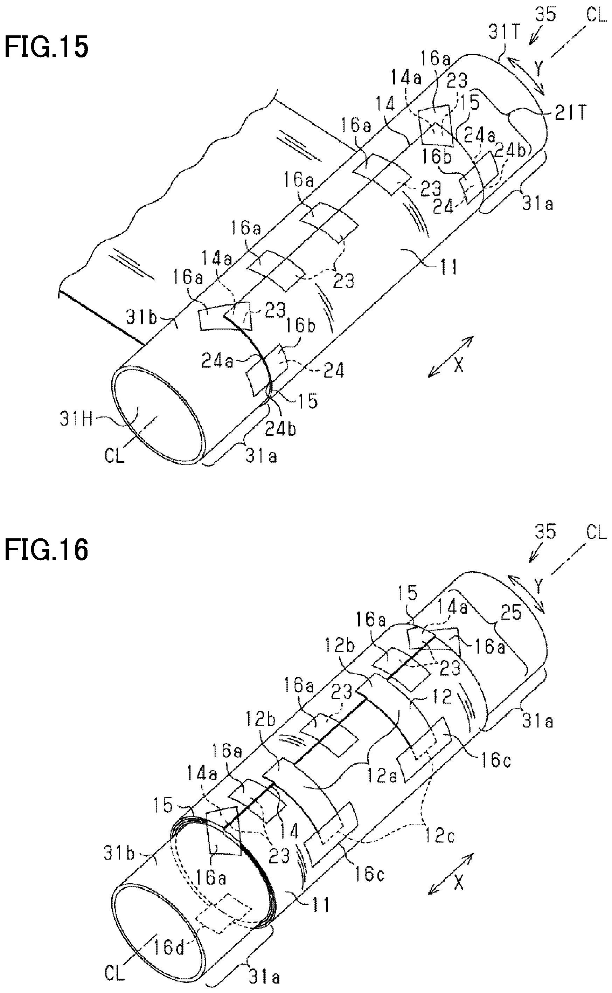

As illustrated in Fig. 15, the wound body 35 includes the tubular member 31T having a cylindrical shape that extends in an axial direction X and the light control sheet 11. The tubular member 31T is included in the packaging member. The tubular member 31T has a through hole 31H that extends in the axial direction X and extends through the tubular member 31T in the axial direction X. It is to be noted that the through hole 31H does not necessarily have to be present as long as the outer periphery of the tubular member 31T has a cylindrical shape. Therefore, the shape of the tubular member 31T may also be a columnar shape. The through hole 31H, however, decreases the weight of the tubular member 31T and it is thus preferable that the tubular member 31T have the through hole 31H.

It is preferable that the tubular member 31T be a material having a surface which is not hard to prevent a surface of the light control sheet 11 from having a scratch. For example, a paper pipe is used for the tubular member 31T. The paper pipe is a pipe or a tube made of paper and is used as a shaft around which paper, a fiber, a film, or the like is chiefly wound. A paper pipe having a large diameter, for example, a paper pipe having a diameter of ten inches is used for the light control sheet 11 because of great flexural rigidity.

The light control sheet 11 includes a winding start section 21T. The winding start section 21T is a portion that comes into contact with an outer peripheral surface 31b of the tubular member 31T and at which the winding around the tubular member 31T starts. The winding start section 21T includes the short side 14 of the light control sheet 11.

The short side 14 of the winding start section 21T is fixed to the outer peripheral surface 31b of the tubular member 31T by the first easy-peel tape 16a. The short side 14 of the winding start section 21T is fixed at the position substantially in the middle of the tubular member 31T in the axial direction X such that the length direction of the short side 14 is the same direction as the axial direction X of the tubular member 31T. This forms a middle section and two tube end sections 31a in the tubular member 31T. The light control sheet 11 is wound around the middle section in a circumferential direction Y of the tubular member 31T. The two tube end sections 31a are exposed from the light control sheet 11 on both sides of the tubular member 31T in the axial direction X when the light control sheet 11 is wound around the tubular member 31T. That is, the tubular member 31T includes the middle section around which the light control sheet 11 is wound and the two tube end sections 31a that are exposed on both sides of the tubular member 31T in the axial direction X from the light control sheet 11 wound around the tubular member 31T.

The wound body 35 includes the first easy-peel tape 16a. The short side 14 is fixed to the tubular member 31T in the winding start section 21T by the five first easy-peel tapes 16a. If described in more detail, the adhesive sides of the first easy-peel tapes 16a and the outside surface of the light control sheet 11 are stuck together and the adhesive sides of the first easy-peel tapes 16a and the outer peripheral surface 31b are stuck together to fix the short side 14 to the tubular member 31T. The portions of the outside surface of the light control sheet 11 that are adhered to the adhesive sides of the first easy-peel tapes 16a are fixation target sections 23. The first easy-peel tape 16a has such adhesion per unit area that leaves the adhesive component of the first easy-peel tape 16a on the substrate of the first easy-peel tape 16a and is unlikely to leave the adhesive component of the first easy-peel tape 16a on the surface of the light control sheet 11 at the time of unpackaging.

The three first easy-peel tapes 16a are stuck in the circumferential direction Y to fix the middle portion of the short side 14 and the outer peripheral surface 31b. The number of first easy-peel tapes 16a adhered to the middle portion of the short side 14 in the circumferential direction Y may be changed depending on the length of the short side 14, the width of each of the first easy-peel tapes 16a to be used, or the like.

One first easy-peel tape 16a is stuck at one of the end sections of the short side 14 in the direction between the axial direction X and the circumferential direction Y of the tubular member 31T and the direction closer to the aforementioned one of the end sections of the tubular member 31T from a corner portion 14a. This fixes the corner portion 14a of the light control sheet 11 that is one of the end sections of the short side 14 to the outer peripheral surface 31b.

The corner portion 14a is included in the fixation target section 23 at an end section of the short side 14. The corner portion 14a includes an end section of the short side 14 and an end section of the long side 15. The first easy-peel tape 16a that fixes the corner portion 14a of the light control sheet 11 fixes an end section of the short side 14 and an end section of the long side 15 to the outer peripheral surface 31b.

One first easy-peel tape 16a is stuck at the other end section of the short side 14 in the direction between the axial direction X and the circumferential direction Y of the tubular member 31T and the direction closer to the other end section of the tubular member 31T from the corner portion 14a. This fixes the corner portion 14a of the light control sheet 11 that is the other end section of the short side 14 to the outer peripheral surface 31b.

It is to be noted that the long first easy-peel tape 16a extending in the axial direction X may be stuck in the axial direction X and this may fix the whole of the short side 14 to the tubular member 31T.

It is preferable that the first easy-peel tapes 16a that fix the short side 14 be disposed in the winding start section 21T at substantially even intervals. The short side 14 is efficiently fixed by a smaller number of first easy-peel tapes 16a.

It is preferable that the corner portion 14a of the light control sheet 11 be fixed to the outer peripheral surface 31b by the first easy-peel tape 16a in the winding start section 21T. It is possible for the first easy-peel tape 16a to protect the corner portion 14a that is relatively low in mechanical strength in the light control sheet 11.

The wound body 35 includes the two second easy-peel tapes 16b. The winding start section 21T includes fixation target sections 24 on the two respective long side 15 joined to the short side 14. The fixation target sections 24 are located apart from the short side 14. In the winding start section 21T, each of the two fixation target sections 24 is fixed to the outer peripheral surface 31b of the tube end section 31a by the second easy-peel tape 16b with the inside surface of the light control sheet 11 complying with the outer peripheral surface 31b.

The outside surface of the light control sheet 11 is adhered to the adhesive side of the second easy-peel tape 16b. The outer peripheral surface 31b of the tubular member 31T is adhered to the adhesive side of the second easy-peel tape 16b. This fixes the fixation target section 24 to the tubular member 31T. The portions of the outside surface of the light control sheet 11 that are adhered to the adhesive sides of the second easy-peel tapes 16b are the fixation target sections 24. The second easy-peel tape 16b has such adhesion per unit adhesion area that leaves the adhesive component of the second easy-peel tape 16b on the substrate of the second easy-peel tape 16b and is unlikely to leave the adhesive component of the second easy-peel tape 16b on the surface of the light control sheet 11 at the time of unpackaging.

A portion of the light control sheet 11 that comes into contact with the outer peripheral surface 31b of the tubular member 31T is a sheet portion for the first round. The fixation target section 24 is the outside surface of the light control sheet 11 including a portion of the long side 15 and a portion of the sheet portion for the first round in the light control sheet 11 wound around the tubular member 31T. The sheet portion for the first round includes, on each of the two long sides 15 joined to the short side 14, the two fixation target sections 23 and 24 arranged on the outside surface of the light control sheet 11 in the circumferential direction Y of the tubular member 31T. The fixation target sections 23 and 24 are respectively fixed to the outer peripheral surface 31b of the tubular member 31T by the easy-peel tapes 16a and 16b. It is to be noted that the sheet portion for the first round may include the two or more fixation target sections 23 and 24 arranged on the outside surface of the light control sheet 11 in the circumferential direction Y of the tubular member 31T. That is, the two or more second easy-peel tapes 16b may be used for one long side 15 to include the two or more fixation target sections 24 in the sheet portion for the first round on each of the two long sides 15 joined to the short side 14.

The point on the long side 15 included in the fixation target section 24 that is the closest to the short side 14 is a fixation start point 24a. The point on the long side 15 included in the fixation target section 24 that is the farthest from the short side 14 is a fixation end point 24b. The light control sheet 11 is fixed to the tube end section 31a by the second easy-peel tape 16b to bring the portion of the long side 15 from the fixation start point 24a to the fixation end point 24b into contact with the outer peripheral surface 31b of the tubular member 31T.

As illustrated in Fig. 16, the light control sheet 11 is wound once or more in the circumferential direction Y of the tubular member 31T. The light control sheet 11 includes a winding end section 25. The winding end section 25 is a portion that comes into contact with the outside surface of the light control sheet 11 wound around the tubular member 31T and at which the winding around the tubular member 31T ends. The winding end section 25 includes one short side 14 of the light control sheet 11 and the pair of flexible wiring substrates 12 joined to the short side 14.

The wound body 35 includes the first easy-peel tape 16a. The short side 14 of the winding end section 25 is fixed to the outside surface of the light control sheet 11 wound around the tubular member 31T by the first easy-peel tape 16a. When the light control sheet 11 finishes being wound, the position of the short side 14 of the winding start section 21T in the axial direction X and the position of the short side 14 of the winding end section 25 in the axial direction X are the same position. The length direction of the short side 14 of the winding end section 25 is then the same direction as the axial direction X of the tubular member 31T. In this state, the short side 14 of the winding end section 25 is fixed to the light control sheet 11 and the tubular member 31T.

The short side 14 is fixed to the light control sheet 11 and the tubular member 31T in the winding end section 25 by the five first easy-peel tapes 16a. The first easy-peel tape 16a has such adhesion per unit adhesion area that leaves the adhesive component of the first easy-peel tape 16a on the substrate of the first easy-peel tape 16a and is unlikely to leave the adhesive component of the first easy-peel tape 16a on the outside surface of the light control sheet 11 at the time of unpackaging.

The three first easy-peel tapes 16a are stuck in the circumferential direction Y to fix the middle portion of the short side 14 and the outside surface of the light control sheet 11 wound around the tubular member 31T. The three first easy-peel tapes 16a are used to stick together the outside surface of the light control sheet 11 in the winding end section 25 and the adhesive sides of the first easy-peel tapes 16a. The outside surface of the light control sheet 11 wound around the tubular member 31T and the adhesive sides of the first easy-peel tapes 16a are stuck together. This fixes the short side 14 to the outside surface of the light control sheet 11 with the three first easy-peel tapes 16a. The number of first easy-peel tapes 16a adhered to the middle portion of the short side 14 in the circumferential direction Y may be changed depending on the length of the short side 14, the width of each of the first easy-peel tapes 16a to be used, or the like.

One first easy-peel tape 16a is stuck at one of the end sections of the short side 14 in the direction between the axial direction X and the circumferential direction Y of the tubular member 31T and the direction closer to the aforementioned one of the end sections of the tubular member 31T from a corner portion 14a. The one first easy-peel tape 16a thereby fixes the corner portion 14a of the light control sheet 11 that is one of the end sections of the short side 14 and the outside surface of the light control sheet 11 wound around the tubular member 31T and fixes the corner portion 14a and the outer peripheral surface 31b. In more detail, the adhesive side of the first easy-peel tape 16a and the outside surface of the light control sheet 11 in the winding end section 25 are stuck together and the adhesive side of the first easy-peel tape 16a and the outside surface of the light control sheet 11 wound around the tubular member 31T are stuck together. Further, the adhesive side of the first easy-peel tape 16a and the outer peripheral surface 31b are stuck together. This fixes one of the corner portions 14a of the short side 14 of the winding end section 25 to the outside surface of the light control sheet 11 wound around the tubular member 31T and the outer peripheral surface 31b the one first easy-peel tape 16a.

The corner portion 14a includes an end section of the short side 14 and an end section of the long side 15. The first easy-peel tape 16a that fixes the corner portion 14a of the light control sheet 11 fixes an end section of the short side 14 and an end section of the long side 15 to the outside surface of the light control sheet 11 wound around the tubular member 31T and the outer peripheral surface 31b.

One first easy-peel tape 16a is stuck at the other end section of the short side 14 in the direction between the axial direction X and the circumferential direction Y of the tubular member 31T and the direction closer to the other end section of the tubular member 31T from the corner portion 14a. The one first easy-peel tape 16a thereby fixes the corner portion 14a of the light control sheet 11 that is the other end section of the short side 14 and the outside surface of the light control sheet 11 wound around the tubular member 31T and fixes the corner portion 14a and the outer peripheral surface 31b. In more detail, the adhesive side of the first easy-peel tape 16a and the outside surface of the light control sheet 11 in the winding end section 25 are stuck together and the adhesive side of the first easy-peel tape 16a and the outside surface of the light control sheet 11 wound around the tubular member 31T are stuck together. Further, the adhesive side of the first easy-peel tape 16a and the outer peripheral surface 31b are stuck together. This fixes the other corner portion 14a of the short side 14 of the winding end section 25 to the outside surface of the light control sheet 11 wound around the tubular member 31T and the outer peripheral surface 31b with one first easy-peel tape 16a.

It is to be noted that one long first easy-peel tape 16a extending in the axial direction X may be stuck in the axial direction X. This may fix the whole of the short side 14 to the tubular member 31T.

It is preferable that the first easy-peel tapes 16a that fix the short side 14 be disposed in the winding end section 25 at substantially even intervals. This allows a smaller number of first easy-peel tapes 16a to efficiently fix the short side 14. In addition, the corner portion 14a of the light control sheet 11 may be fixed to the outer peripheral surface 31b in the winding end section 25. This allows the first easy-peel tape 16a to protect the corner portion 14a that is relatively low in strength in the light control sheet 11.

The wound body 35 includes a third easy-peel tape 16c. The third easy-peel tape 16c fixes the distal end section 12c of each of the extending sections 12a of the flexible wiring substrate 12 to the light control sheet 11 wound around the tubular member 31T.

The distal end sections 12c of the two flexible wiring substrates 12 may be fixed to the outside surface of the light control sheet 11 by one long third easy-peel tape 16c. The proximal end section 12b of each of the flexible wiring substrates 12 may be fixed to the outside surface of the light control sheet 11 by still other third easy-peel tape 16c. In addition, in that case, the third easy-peel tape 16c that fixes the proximal end section 12b may be stuck to overlap with the first easy-peel tape 16a that fixes the short side 14. The third easy-peel tape 16c has such adhesion per unit adhesion area that leaves the adhesive component of the third easy-peel tape 16c on the substrate of the third easy-peel tape 16c and is unlikely to leave the adhesive component of the third easy-peel tape 16c on the surface of the flexible wiring substrate 12 and the surface of the light control sheet 11 at the time of unpackaging.

In the winding end section 25, the light control sheet 11 may finish being wound around the tubular member 31T on the short side 14 on which the flexible wiring substrates 12 are arranged. At this time, the third easy-peel tape 16c may fix the distal end section 12c of each of the extending sections 12a of the flexible wiring substrate 12 to the light control sheet 11 wound around the tubular member 31T. In addition, winding around the tubular member 31T may start on the short side 14 on which the flexible wiring substrates 12 are arranged and the winding around the tubular member 31T may end on the short side 14 on which the other flexible wiring substrates 12 are arranged. That is, the extending sections 12a may be each fixed to at least one of the tubular member 31T and the light control sheet 11 by the third easy-peel tape 16c.

It is preferable that each of the flexible wiring substrates 12 be fixed to at least one of the tubular member 31T and the light control sheet 11 with a protective sheet in between. For example, a foamed sheet, an air bubble cushioning material, or the like is used for the protective sheet. The foamed sheet refers to a cushioning material given elasticity, for example, by foaming polyethylene to include closed cells in the sheet. The air bubble cushioning material is, for example, a sheet such as a bubble wrap (registered trademark) or an air cap (registered trademark) molded by confining air in a columnar protrusion. A protective sheet 51 prevents the tubular member 31T or the outside surface of the light control sheet 11, and the inside surface of each of the flexible wiring substrates 12 from coming into contact. This makes it possible to restrain the surfaces of the flexible wiring substrate 12 and the light control sheet 11 from having scratches. The whole or a part of the flexible wiring substrate 12 may be protected by a protective sheet from above the flexible wiring substrate 12.

The wound body 35 includes a fourth easy-peel tape 16d. The fourth easy-peel tape 16d is disposed on the outside surface of the light control sheet 11 to which the winding end section 25 is fixed. The fourth easy-peel tape 16d is opposed to the short side 14 of the winding end section 25 across a center CL of the tubular member 31T. The fourth easy-peel tape 16d fixes a part of each of the long sides 15 to the outer peripheral surface 31b. The adhesive side of the fourth easy-peel tape 16d is adhered to the outside surface of the light control sheet 11 to which the winding end section 25 is fixed. The adhesive side of the fourth easy-peel tape 16d is adhered to the outer peripheral surface 31b. The two portions of the long sides 15 are the portion of one of the long sides 15 of the light control sheet 11 in the axial direction X and the portion of the other long side 15.

The two corner portions 14a are fixed to the outer peripheral surface 31b by the first easy-peel tapes 16a in the winding end section 25. This makes it unlikely that the short side 14 is displaced in the axial direction X. A portion of the light control sheet 11 opposed to the short side 14 across the center CL is fixed to the outer peripheral surface 31b by the fourth easy-peel tape 16d. This makes it unlikely that the long sides 15 are displaced in the axial direction X. The whole of the light control sheet 11 is therefore unlikely to be displaced in the axial direction X at the time of transportation.

### [Unwound Light Control Sheet 11]

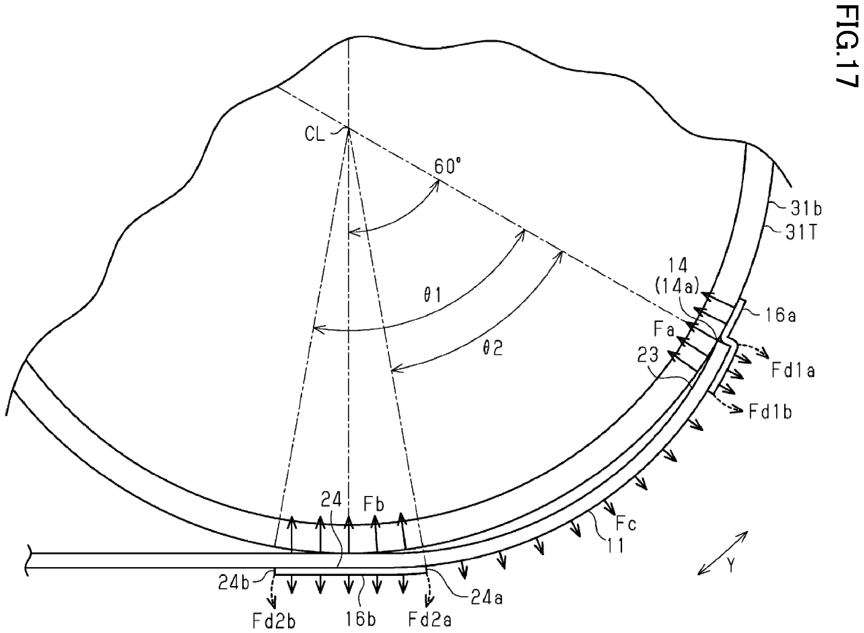

As illustrated in Fig. 17, when the light control sheet 11 is unwound from the tubular member 31T in an unpackaging operation, the light control sheet 11 that holds the winding start section 21T from above moves away from the winding start section 21T. At this time, the winding start section 21T is exposed. In the winding start section 21T, the plurality of fixation target sections 23 and the two fixation target sections 24 are fixed to the outer peripheral surface 31b to cause the inside surface of the light control sheet 11 to align with the outer peripheral surface 31b of the tubular member 31T. Fig. 17 is a schematic diagram illustrating the curved shape of the light control sheet 11 on each of the long sides 15 when the light control sheet 11 is unwound.

Portions other than a portion of the short side 14 and a portion of the long side 15 included in the fixation target section 23 and a portion of the long side 15 included in the fixation target section 24 are not fixed to the outer peripheral surface 31b on the inside surface of the light control sheet 11. While the shapes of the easy-peel tapes 16a and 16b are slightly deformed, the light control sheet 11 is lifted up from the outer peripheral surface 31b at the portions other than the portion of the short side 14 and the portion of the long side 15 included in the fixation target section 23 and the portion of the long side 15 included in the fixation target section 24.

The central angle formed by the short side 14 and the fixation end point 24b with respect to the center CL of the tubular member 31T is a first angle θ1. The central angle formed by the short side 14 and the fixation start point 24a with respect to the center CL of the tubular member 31T is a second angle θ2.

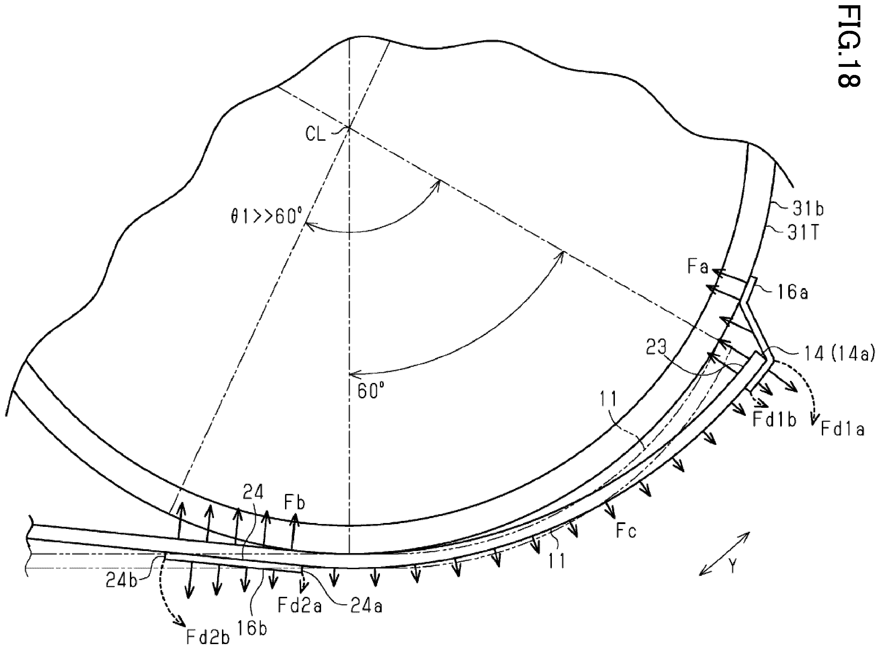

As illustrated in Fig. 18, if the short side 14 and the fixation end point 24b have a greater distance than that of Fig. 17, the distance between the portions fixed by the easy-peel tapes 16a and 16b to cause the inside surface of the light control sheet 11 to align with the outer peripheral surface 31b increases. When the first angle θ1 increases, the angle for fixation by the easy-peel tapes 16a and 16b to cause the inside surface of the light control sheet 11 to align with the outer peripheral surface 31b increases.

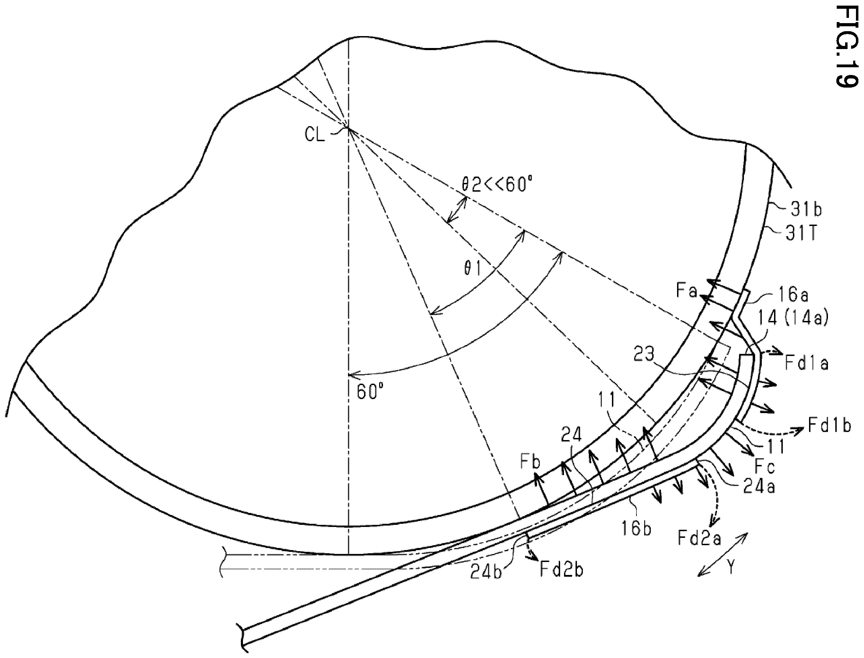

As illustrated in Fig. 19, if the short side 14 and the fixation start point 24a have a less distance than that of Fig. 17, a portion of the long side 15 that is not fixed by any of the easy-peel tapes 16a and 16b has a less length. When the second angle θ2 decreases, the angle between portions at which the inside surface of the light control sheet 11 is not fixed to the outer peripheral surface 31b between the easy-peel tapes 16a and 16b decreases.

When the short side 14 and the fixation end point 24b have a less distance, the distance between the portions fixed by the two first easy-peel tapes 16a to cause the inside surface of the light control sheet 11 to align with the outer peripheral surface 31b decreases. When the first angle θ1 decreases, the angle for fixation by the two first easy-peel tapes 16a to cause the inside surface of the light control sheet 11 to align with the outer peripheral surface 31b decreases.

### [Configuration of Packaging Body 100]

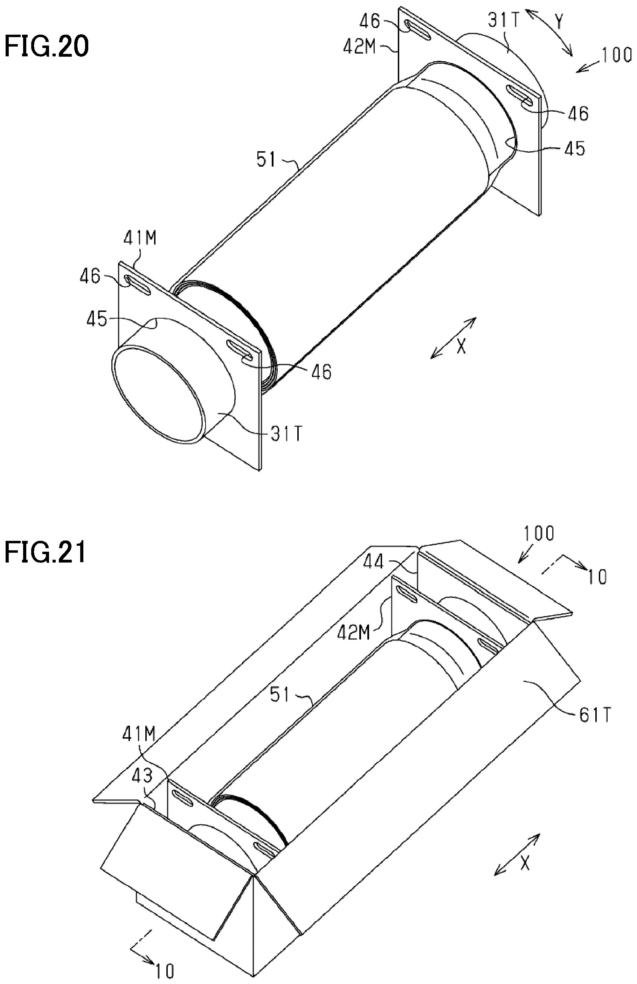

As illustrated in Fig. 20, the protective sheet 51 is wound around the wound body 35 including the tubular member 31T and the light control sheet 11 from above the light control sheet 11. The termination section of the wound protective sheet 51 is fixed to the outside surface of the protective sheet 51 by an easy-peel tape. This restrains the displacement between the outside surface of the light control sheet 11 for the n-th round and the inside surface of the light control sheet 11 for the n+1-th round by the frictional force generated by pushing the outside surface of the light control sheet 11 for the n-th round and the inside surface of the light control sheet 11 for the n+1-th round against each other. The length of the protective sheet 51 in the axial direction X is slightly greater than the length of the short side 14 of the light control sheet 11. The protective sheet 51 thereby protects the whole of the outside surface of the light control sheet 11. Both end sections of the protective sheet 51 in the axial direction X are then fixed to the outer peripheral surface 31b of the tubular member 31T by easy-peel tapes. The frictional force exerted by the surface of the protective sheet 51 and the outside surface of the light control sheet 11 restrains the displacement of the protective sheet 51 with respect to the light control sheet 11. Additionally, it is preferable to wind the protective sheet 51 at least twice. The protective sheet 51 is wound at least twice to cause the surfaces of the protective sheet 51 to overlap. The frictional force between the surfaces of the protective sheet 51 therefore makes it possible to restrain the fixation of the protective sheet 51 from being looser.

The packaging body 100 includes a first fixation member 41M that is fitted into one of the tube end sections 31a and a second fixation member 42M that is fitted into the other tube end section 31a. The first fixation member 41M and the second fixation member 42M are included in the packaging member and a position restriction member. The first fixation member 41M and the second fixation member 42M are plates each having a substantially square shape. For example, plate-shaped corrugated boards are used for the first fixation member 41M and the second fixation member 42M. It is to be noted that plastic corrugated boards may also be used.

The first fixation member 41M and the second fixation member 42M each include a first hole section 45 substantially in the middle. The first fixation member 41M and the second fixation member 42M have the same shape. One of the tube end sections 31a is fitted into the first hole section 45 of the first fixation member 41M. The other tube end section 31a is fitted into the first hole section 45 of the second fixation member 42M. The first fixation member 41M and the second fixation member 42M are fitted up to the positions at which the regions around the first hole sections 45 on the surfaces into which the tube end sections 31a are fitted come into contact with the end sections of the protective sheet 51. The first fixation member 41M and the second fixation member 42M thereby position the light control sheet 11 with respect to the tubular member 31T in the axial direction X of the tubular member 31T.

It is to be noted that the packaging body for the light control sheet 11 may omit the protective sheet 51. The length of the protective sheet 51 in the axial direction X may be slightly less than the length of the short side 14 of the light control sheet 11 and the long sides 15 of the light control sheet 11 may be exposed from the protective sheet 51. The first fixation member 41M and the second fixation member 42M may directly position the light control sheet 11 with respect to the tubular member 31T in the axial direction X of the tubular member 31T. It is, however, preferable that the protective sheet 51 protect the whole of the outside surface of the light control sheet 11 to protect the long sides 15 of the light control sheet 11.

It is preferable that the distance between the first fixation member 41M and the long side 15 opposed to the first fixation member 41M and the distance between the second fixation member 42M and the long side 15 opposed to the second fixation member 42M be greater than or equal to 10 mm. An impact cushioning effect by the protective sheet 51 located between the respective fixation members 41M and 42M and the long sides 15 reduces impact transmitted from the respective fixation members 41M and 42M to the light control sheet 11.

Each of the fixation members 41M and 42M includes two second hole sections 46. The two second hole sections 46 are disposed to have substantial plane symmetry with respect to a plane passing through the center of the first hole section 45. Each of the fixation members 41M and 42M is fitted into the tube end section 31a with the two second hole sections 46 disposed up. At this time, the first hole sections 45 are each disposed at height at which the outer peripheral surface of the protective sheet 51 is out of contact with the floor surface or the working surface.

It is preferable that the short side 14 on which the flexible wiring substrates 12 are arranged face down when the tubular member 31T is fitted into the respective fixation members 41M and 42M. The short side 14 on which the flexible wiring substrates 12 are arranged includes an electrode section of the light control sheet 11. The electrode section is weak to impact in the light control sheet 11. Unpackaging starts from the upper portion of the wound body 35. A configuration in which the short side 14 on which the flexible wiring substrates 12 are arranged faces down protects the electrode section during unpackaging.

A first operator puts a finger of the right hand into one of the second hole sections 46 at the upper portion of the first fixation member 41M and puts a finger of the left hand into the other second hole section 46. A second operator then puts a finger of the right hand into one of the second hole sections 46 at the upper portion of the second fixation member 42M and puts a finger of the left hand into the other second hole section 46. This allows two operators to lift up the light control sheet 11 around which the protective sheet 51 is wound without directly touching the light control sheet 11 around which the protective sheet 51 is wound. That is, it is possible for the operators to move the wound light control sheet 11 without changing the state of the light control sheet 11 wound around the tubular member 31T.

As illustrated in Fig. 21, the packaging body 100 for the light control sheet 11 includes a packaging box 61T in which the wound body 35 is packed. The packaging box 61T is included in the packaging member. It is preferable that a material included in the packaging box 61T be light, high in mechanical strength, high in durability, and inexpensive. The packaging box 61T may be a corrugated cardboard box. The wound body is lifted using the two second hole sections 46 of the first fixation member 41M and the two second hole sections 46 of the second fixation member 42M and disposed in the packaging box 61T.

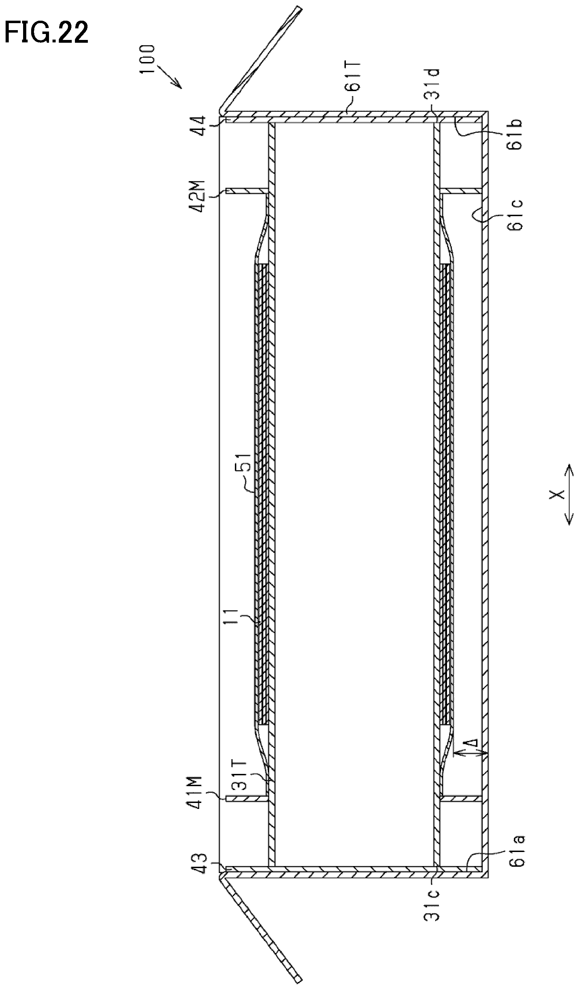

As illustrated in Fig. 22, the packaging body 100 includes a third fixation member 43 that fixes one end 31c of the tubular member 31T in the axial direction X of the tubular member 31T to the packaging box 61T. The packaging body 100 then includes a fourth fixation member 44 that fixes another end 31d of the tubular member 31T in the axial direction X of the tubular member 31T to the packaging box 61T. The third fixation member 43 and the fourth fixation member 44 are plates each having a substantially square shape. For example, plate-shaped corrugated boards are used for the third fixation member 43 and the fourth fixation member 44. It is to be noted that plastic corrugated boards may also be used.

The dimensions of the inside of the packaging box 61T in the axial direction X are shorter than the dimensions of the tubular member 31T in the axial direction X by the total dimensions of the thickness dimension of the third fixation member 43 and the thickness dimension of the fourth fixation member 44. This makes it possible to easily dispose the light control sheet 11 wound around the tubular member 31T in the packaging box 61T. After the light control sheet 11 wound around the tubular member 31T is disposed in the packaging box 61T, the third fixation member 43 and the fourth fixation member 44 are disposed. The third fixation member 43 is inserted between an inner wall 61a of the packaging box 61T and one end 31c and the fourth fixation member 44 is inserted between an inner wall 61b of the packaging box 61T and the other end 31d. This fixes, in the packaging box 61T, the position of the light control sheet 11 wound around the tubular member 31T in the axial direction X.

The light control sheet 11 wound around the tubular member 31T is supported by the first fixation member 41M and the second fixation member 42M. This forms a gap Δ between the outside surface of the protective sheet 51 wound around the light control sheet 11 and an inner surface of the packaging box 61T including an inner bottom 61c. The first fixation member 41M and the second fixation member 42M are position restriction members that are located between the respective outer peripheral surfaces 31b of the tube end sections 31a on both sides in the axial direction X and inner surfaces of the packaging box 61T and space the light control sheet 11 wound around the tubular member 31T apart from the inner surfaces of the packaging box 61T. It is to be noted that the inner surface of the packaging box 61T including the inner bottom 61c includes four inner surfaces located in the direction orthogonal to the axial direction X when the packaging box 61T is closed. In addition, the values of the gaps Δ with the four inner surfaces may be values different from each other.

### [Method for Manufacturing Packaging Body 100]

A method for manufacturing the packaging body 100 according to the fourth embodiment will be described.

The packaging body 100 is manufactured in the following work procedure.
(a) The light control sheet 11 to be packaged is spread to be flat and disposed on the workbench with the side on which a product label is stuck facing up. The tubular member 31T whose length in the axial direction X is greater than the short side 14 of the light control sheet 11 by 50 mm or more and whose diameter is 10 inches is disposed close to the light control sheet 11.
(b) To fix the winding start section 21T, the two corner portions 14a of the short side 14 and a plurality of portions of the middle section of the short side 14 are fixed to the outer peripheral surface 31b of the tubular member 31T by the easy-peel tapes 16a each having a width of 50 mm.
(c) While the inside surface of the light control sheet 11 is caused to align with the outer peripheral surface 31b of the tubular member 31T, each of the two long sides 15 joined to the short side 14 is fixed to the outer peripheral surface 31b of the tubular member 31T by the easy-peel tape 16b having a width of 50 mm. The fixation position is the position at which the short side 14 and the fixation start point 24a have a distance therebetween of 50 mm or more and 100 mm or less.
(d) When any of the flexible wiring substrates 12 is connected to the short side 14 of the light control sheet 11 in the winding start section 21T, the proximal end section 12b and the distal end section 12c of the flexible wiring substrate 12 are fixed to the outer peripheral surface 31b of the tubular member 31T by the easy-peel tapes 16c with a protective sheet in between. The whole of the short side 14 including the proximal end section 12b that is an electrode section of the flexible wiring substrate 12 is then protected by the protective sheet from above.
(e) The light control sheet 11 is wound around the outer peripheral surface 31b of the tubular member 31T once or more. The two corner portions 14a of the short side 14 of the light control sheet 11 in the winding end section 25 and a plurality portions of the middle section of the short side 14 are fixed to the outside surface of the light control sheet 11 wound around the tubular member 31T and the outer peripheral surface 31b of the tubular member 31T by the easy-peel tapes 16a.
(f) The two portions of each of the long sides 15 located on the 180-degree opposite side to the short side 14 in the winding end section 25 with respect to the center CL of the tubular member 31T are fixed to the outer peripheral surface 31b of the tubular member 31T by the fourth easy-peel tapes 16d each having a width of 50 mm.
(g) When any of the flexible wiring substrates 12 is connected to the short side 14 of the light control sheet 11 in the winding end section 25, the proximal end section 12b and the distal end section 12c of the flexible wiring substrate 12 are fixed to the outside surface of the light control sheet 11 by the easy-peel tapes 16c with a protective sheet in between.
(h) The protective sheet 51 is wound from above the light control sheet 11 to which the winding end section 25 is fixed. The termination section of the wound protective sheet 51 is then fixed to the outside surface of the wound protective sheet 51. Both end sections of the protective sheet 51 in the axial direction X are then fixed to the outer peripheral surface 31b of the tubular member 31T. A label seal indicating that the product is packaged is then adhered to the protective sheet 51.
(i) Of the first fixation member 41M and the second fixation member 42M, the first fixation member 41M is fitted into one of the tube end section 31a and the second fixation member 42M is fitted into the other tube end section 31a with the second hole sections 46 disposed up. The first fixation member 41M and the second fixation member 42M are each fitted up to the position at which the region around the first hole section 45 pushes an end side of the protective sheet 51.
(j) The light control sheet 11 wound around the tubular member 31T is lifted up by using the two second hole sections 46 of the first fixation member 41M and the two second hole sections 46 of the second fixation member 42M and disposed in the packaging box 61T.
(k) The third fixation member 43 is inserted between the inner wall 61a of the packaging box 61T and one end 31c and the fourth fixation member 44 is inserted between the inner wall 61b of the packaging box 61T and the other end 31d. This fixes the position of the light control sheet 11 in the axial direction X.
(l) The lids of the packaging box 61T are closed and sealed by a packaging tape. Finally, a label seal indicating that the product is packaged is adhered to an outer surface of the packaging box 61T and the packaging operation for manufacturing the packaging body 100 according to the present embodiment ends.

Returning to Fig. 17, when the light control sheet 11 is unwound from the tubular member 31T in an unpackaging operation, the light control sheet 11 that holds the winding start section 21T from above moves away from the winding start section 21T, and the winding start section 21T is then exposed. The fixation target section 23 including the short side 14 in the winding start section 21T is fixed to the outer peripheral surface 31b. The fixation target section 24 that does not include the short side 14 in the winding start section 21T is also fixed to the outer peripheral surface 31b.

Adhesion Fa of the first easy-peel tape 16a holds one of the free ends of the fixation target section 23 to the outer peripheral surface 31b. Adhesion Fb of the second easy-peel tape 16b holds the other free end of the fixation target section 24 to the outer peripheral surface 31b. The light control sheet 11 forms a beam deflection curve in which the region between the two free ends is slightly lifted up from the outer peripheral surface 31b by the restoring force of the light control sheet 11. The restoring force of the light control sheet 11 is a force that returns the curved light control sheet 11 back to being a flat light control sheet 11.

The beam deflection curve of the shape of the light control sheet 11 is a cubic curve. The outer peripheral surface 31b of the tubular member 31T is a cylindrical surface. An arc that is a part of the cylindrical surface approximates a quadratic curve. A cubic curve passing through the origin of XY coordinates has a smaller inclination near the origin of the cubic curve than the inclination of a quadratic curve passing through the origin of the XY coordinates near the origin of the quadratic curve. A cubic curve passing through the origin of XY coordinates has a larger radius of curvature near the origin than the radius of curvature of a quadratic curve passing through the origin of the XY coordinates near the origin. The radius of curvature of the light control sheet 11 near a free end of the light control sheet 11 is greater than the radius of curvature of the outer peripheral surface 31b of the tubular member 31T. The radius of curvature between the two free ends of the light control sheet 11 is greater than the radius of curvature of the outer peripheral surface 31b. Deflection force Fc of the light control sheet 11 lifts up the portion between the fixation target section 23 and the fixation target section 24 from the outer peripheral surface 31b while slightly deforming the shapes of the easy-peel tapes 16a and 16b.

The light control sheet 11 applies forces Fd1a, Fd1b, Fd2a, and Fd2b to the easy-peel tapes 16a and 16b in normal directions of the outer peripheral surface 31b. The forces Fd1a, Fd1b, Fd2a, and Fd2b flip up the easy-peel tapes 16a and 16b from the outer peripheral surface 31b. The forces Fd1a, Fd1b, Fd2a, and Fd2b are generated by the deflection force Fc of the light control sheet 11.

The force Fd1a that flips up the easy-peel tapes 16a and 16b on the short side 14 and the force Fd1b that flips up the easy-peel tapes 16a and 16b at the portion on the opposite side to the short side 14 in the fixation target section 23 are substantially equal. The force Fd2b that flips up the easy-peel tapes 16a and 16b at the fixation end point 24b and the force Fd2a that flips up the easy-peel tapes 16a and 16b at the portion on the opposite side to the fixation start point 24a in the fixation target section 23 are substantially equal. The adhesions Fa and Fb of the easy-peel tapes 16a and 16b resist the flipping-up forces Fd1a, Fd1b, Fd2a, and Fd2b. It is preferable that the central angle formed by the two free ends with respect to the center CL of the tubular member 31T be substantially 60°. In a case where the central angle is substantially 60°, the winding start section 21T is stably fixed to the outer peripheral surface 31b.

As illustrated in Fig. 18, it is assumed that the position of the fixation target section 24 is farther from the position of the fixation target section 23. That is, the fixation target section 24 is disposed at a position farther from the beam center than the position of the fixation target section 24 illustrated in Fig. 17. The flipping-up force Fd2b then grows greater at the fixation end point 24b. Similarly, the flipping-up force Fd1a grows greater on the short side 14.

As the first angle θ1 increases, the deflection force Fc increases by the increase in the first angle θ1 and the forces Fd1a and Fd2b increase. As compared with Fig. 17, the light control sheet 11 is then lifted up considerably from the outer peripheral surface 31b.

It is to be noted that the deflection force Fc also lifts up the middle portion of the light control sheet 11 in the axial direction X from the outer peripheral surface 31b. The middle portion of the light control sheet 11 in the axial direction X, however, has a gently curved shape and the light control sheet 11 is less lifted up than on the long sides 15. Meanwhile, the second easy-peel tapes 16b restrict the light control sheet 11 lifting up on the long sides 15. Relatively great lifting-up force in the light control sheet 11 is therefore applied to the corner portion 14a formed by each of the long sides 15 and the short side 14.

In this way, the light control sheet 11 is flipped up at the fixation end point 24b and deformed to allow the corner portion 14a to be lifted up the most.

The mechanical strength of the corner portion 14a is lower than the mechanical strength of the other portions. In a case where the first angle θ1 is large, restoring force that grows greater by the large first angle θ1 is applied to the light control sheet 11. A great restoring force is likely to fold the corner portion 14a. In a case where the central angle is substantially 60°, the peeling of the easy-peel tapes 16a and 16b and the folding of the corner portion 14a are restrained.

As illustrated in Fig. 19, it is assumed that the position of the fixation target section 24 is closer to the position of the fixation target section 23. That is, the fixation target section 24 is disposed at a position closer to the beam center than the fixation target section 24 illustrated in Fig. 17. The flipping-up force Fd2a then grows greater at the fixation start point 24a. Similarly, the flipping-up force Fd1b grows greater in the fixation target section 23.

As the second angle θ2 decreases, the deflection force Fc decreases, but the forces Fd2a and Fd1b of flipping-up from the beam center increase. As compared with Fig. 17, the light control sheet 11 is then lifted up considerably from the outer peripheral surface 31b.

Here, the deflection force Fc also lifts up the middle portion of the light control sheet 11 in the axial direction X from the outer peripheral surface 31b. The middle portion of the light control sheet 11 in the axial direction X, however, has a gently curved shape and the light control sheet 11 is less lifted up than on the long sides 15. Meanwhile, the second easy-peel tape 16b restricts the light control sheet 11 lifting up on a part of each of the long sides 15. Relatively great lifting-up force in the light control sheet 11 is therefore applied to the corner portion 14a formed by each of the long sides 15 and the short side 14.

In this way, the light control sheet 11 is flipped up at the fixation start point 24a and deformed to allow the corner portion 14a to be lifted up the most.

The mechanical strength of the corner portion 14a is lower than the mechanical strength of the other portions. In a case where the second angle θ2 is small, the corner portion 14a is more likely to be folded by the large first angle θ1. In a case where the central angle is substantially 60°, the peeling of the easy-peel tapes 16a and 16b and the folding of the corner portion 14a are restrained.

In a case where the second angle θ2 is small, the first angle θ1 is likely to be excessively small. In a case where the first angle θ1 is excessively small, the light control sheet 11 and the tubular member 31T are unstably fixed in the winding start section 21T. Therefore, the first angle θ1 larger than a predetermined value causes the winding start section 21T and the tubular member 31T to be stably fixed.

As illustrated in Fig. 16, the short side 14 is fixed to the outer peripheral surface 31b by the first easy-peel tape 16a in the winding end section 25. A portion of each of the long sides 15 that is opposed to the short side 14 across the center CL is fixed to the outer peripheral surface 31b by the second easy-peel tape 16b.

As illustrated in Fig. 20, the protective sheet 51 is wound in the circumferential direction Y from above the light control sheet 11. The termination section of the protective sheet 51 is fixed to the outside surface of the protective sheet 51 by an easy-peel tape. The inside surface of the light control sheet 11 for the n+1-th round is pushed against the outside surface of the light control sheet 11 for the n-th round by the wound protective sheet 11. The displacement of the outside surface of the light control sheet 11 for the n-th round with respect to the inside surface of the light control sheet 11 for the n+1-th round is restrained by the wound protective sheet 11.

The first fixation member 41M and the second fixation member 42M position both end sections of the protective sheet 51 in the axial direction X on the tubular member 31T in the axial direction X of the tubular member 31T. The first fixation member 41M and the second fixation member 42M position both end sections of the light control sheet 11 in the axial direction X on the tubular member 31T in the axial direction X of the tubular member 31T.

As illustrated in Fig. 21, the third fixation member 43 and the fourth fixation member 44 position the tubular member 31T in the packaging box 61T. This positions the whole of the light control sheet 11 in the packaging box 61T.

### [Confirmation Result of Stability in Winding Start Section 21T]

The wound body 35 in which the light control sheet 11 is wound around the tubular member 31T is formed by changing the value of the first angle θ1 and the value of the second angle θ2. The following describes results of evaluations of the stability in the winding start section 21T obtained when the wound body 35 is unwound.

It was found that the easy-peel tapes 16a and 16b were sometimes peeled off or the corner portion 14a sometimes became folded in an unpackaging operation when the light control sheet 11 is unwound from the tubular member 31T in a case where the first angle θ1 is greater than 69°. It was found that the easy-peel tapes 16a and 16b were sometimes peeled off or the corner portion 14a sometimes became folded in an unpackaging operation when the light control sheet 11 is unwound from the tubular member 31T in a case where the second angle θ2 is less than 23°. It was found that the easy-peel tapes 16a and 16b were sometimes peeled off or the corner portion 14a sometimes became folded in an unpackaging operation when the light control sheet 11 is unwound from the tubular member 31T in a case where the first angle θ1 is less than 46°. It is to be noted that "folded" includes deformation that decreases the quality of the light control sheet 11 such as irreversibly curved, scratched, or cracked.

In this way, in a case where the first angle θ1 is greater than 69°, the corner portion 14a is likely to be folded by restoring force in an unpackaging operation when the light control sheet 11 is unwound from the tubular member 31T. In a case where the second angle θ2 is less than 23°, the corner portion 14a is likely to be folded by restoring force in an unpackaging operation when the light control sheet 11 is unwound from the tubular member 31T. In a case where the first angle θ1 is less than 46°, the fixation of the light control sheet 11 is displaced to make it likely that the corner portion 14a is folded in an unpackaging operation when the light control sheet 11 is unwound from the tubular member 31T.

In a case where the size of the first angle θ1 is less than or equal to 69°, the corner portion 14a is restrained from being folded. In a case where the size of the second angle θ2 is greater than or equal to 23°, folding of the corner portion 14a is suppressed. In a case where the size of the first angle θ1 is greater than or equal to 46°, folding of the corner portion 14a is suppressed.

It is to be noted that a paper pipe having a diameter of 10 inches was used for the tubular member 31T in the confirmation of the evaluations described above. Masking tapes each having a width of 50 mm were used for the easy-peel tapes 16a and 16b. At the level at which folding of the corner portion 14a was suppressed, the short side 14 and the fixation start point 24a had a distance of 50 mm or more and 100 mm or less and the short side 14 and the fixation end point 24b had a distance of 100 mm or more and 150 mm or less. The size of the first angle θ1 was 46° or more and 69° or less and the size of the second angle θ2 was 23°.

According to the fourth embodiment, effects listed below are obtained.
(4-1) The winding start section 21T includes one short side 14 of the light control sheet 11 and the fixation target sections 24 on the two respective long side 15 joined to the short side 14. The fixation target sections 24 are located apart from the short side 14. The short side 14 is fixed to the outer peripheral surface 31b of the tubular member 31T by the first easy-peel tape 16a and each of the two fixation target sections 24 is fixed to the outer peripheral surface 31b of the tube end section 31a by the second easy-peel tape 16b. This distributes the load brought about by the force of lifting up the winding start section 21T from the outer peripheral surface 31b of the tubular member 31T when the light control sheet 11 is unwound from the tubular member 31T. It is therefore possible to restrain the corner portion 14a of the light control sheet 11 from being folded by the force of lifting up the winding start section 21T from the outer peripheral surface 31b of the tubular member 31T when the light control sheet 11 is unwound from the tubular member 31T.
(4-2) In a case where the size of the first angle θ1 is less than or equal to 69°, the corner portion 14a is restrained from being folded.
(4-3) In a case where the size of the first angle θ1 is greater than or equal to 46°, the winding start section 21T is stably fixed.
(4-4) In a case where the size of the second angle θ2 is greater than or equal to 23°, the corner portion 14a is restrained from being folded.
(4-5) Each of the extending sections 12a is fixed by the third easy-peel tape 16c and is unlikely to be displaced with respect to the tubular member 31T or the light control sheet 11. This restrains stress applied to the joint section between the first transparent electrode film 11a and the flexible wiring substrate 12.
(4-6) The first fixation member 41M and the second fixation member 42M position the light control sheet 11 with respect to the tubular member 31T in the axial direction X. The light control sheet 11 is therefore unlikely to move in the axial direction X even in a portion of the light control sheet 11 that is not fixed to the outer peripheral surface 31b of the tubular member 31T.
(4-7) The third fixation member 43 and the fourth fixation member 44 position the tubular member 31T in the packaging box 61T in the axial direction X. The light control sheet 11 is therefore unlikely to move in the axial direction X with respect to the packaging box 61T.

Additionally, it is possible to modify and carry out the fourth embodiment as follows. It is possible to carry out the present embodiment and modification examples in combination with each other within the range that allows technical inconsistency to be avoided.
- After a protective sheet is overlaid on the outside surface of the light control sheet 11, the light control sheet 11 and the protective sheet may be wound around the tubular member 31T with the light control sheet 11 and the protective sheet overlaid. The protective sheet prevents the outside surface of the light control sheet 11 for the n-th round and the inside surface of the light control sheet 11 for the n+1-th round from coming into contact. This makes it possible to restrain friction between the surfaces of the light control sheet 11.
- The second light control sheet 11 may be further wound for packaging from above the light control sheet 11 wound around the tubular member 31T. In that case, it is preferable that the second light control sheet 11 be wound on the protective sheet 51 wound from above the light control sheet 11 wound around the tubular member 31T.
- As described above, to prevent the flexible wiring substrates 12 from having overlapping positions on the respective light control sheets 11 in the axial direction X when the plurality of light control sheets 11 are packaged in one packaging box 61T, the respective light control sheets 11 may be wound with the positions shifted in the axial direction X. This makes it possible to restrain instability of the plurality of wound light control sheets 11 due to the overlapping positions of the flexible wiring substrates 12 in the axial direction X.
- The light control sheet 11 may include a lead line connected to the first transparent electrode layer 11c and a lead line connected to the second transparent electrode layer 11f instead of the flexible wiring substrates 12. The lead lines may each include the extending section 12a that extends from the short side 14 of the light control sheet 11 to the outside of the first transparent electrode film 11a or the second transparent electrode film 11d. The extending sections 12a may be each fixed to at least one of the tubular member 31T and the light control sheet 11 by the third easy-peel tape 16c. It is preferable that each of the lead lines be fixed to at least one of the tubular member 31T and the light control sheet 11 with a protective sheet in between. The protective sheet 51 prevents the tubular member 31T or the outside surface of the light control sheet 11, and the lead lines from coming into contact. This makes it possible to restrain the surfaces of the light control sheet 11 from having scratches. In addition, the whole or a part of each of the lead lines may be protected by a protective sheet from above the lead line.
- In a case where the two or more second easy-peel tapes 16b are used for one long side 15 to include the two or more fixation target sections 24 in the sheet portion for the first round on each of the two long sides 15 joined to the short side 14, it is preferable that the interval between the second easy-peel tapes 16b be substantially 60°. If described in more detail, it is preferable that the central angle formed by the fixation start point 24a of the second easy-peel tape 16b that is the closest to the short side 14 and the fixation start point 24a of the second easy-peel tape 16b that is the second closest to the short side 14 with respect to the center CL of the tubular member 31T be substantially 60°.
- The light control sheet 11 may include a two-dimensional code marked by a laser. Various kinds of manufacturing information about the light control sheet 11 such as the time of manufacture, the production lot, the place of manufacture, the type of a manufacturing apparatus, the manufacturing apparatus, or the model of the light control sheet 11 may be embedded in the two-dimensional code. The position at which the two-dimensional code is disposed may be an edge section of the light control sheet 11 or a corner section of the light control sheet 11. The two-dimensional code may be configured to have different electrical conductivity in the portion in which the two-dimensional code is located in the transparent electrode layers 11c and 11f from that of the portion located nearby and be thereby recognized visually. Alternatively, the two-dimensional code may be configured to have a different refractive index in the portion in which the two-dimensional code is located in the light control layer 11g from that of the portion located nearby and be thereby recognized visually.
- The protective sheet 51 may include aluminum foil that covers the whole of the outside surface of the light control sheet 11. The protective sheet 51 may include aluminum foil alone or have a multilayer structure of a cushioning material such as a foamed sheet or an air bubble cushioning material and aluminum foil. The aluminum foil may be disposed on the opposite side to the light control sheet 11 with respect to the cushioning material or the same side as that of the light control sheet 11 with respect to the cushioning material.

In a case where the protective sheet 51 includes aluminum foil, it is possible to restrain the light control sheet 11 from suffering scratching and restrain the light control sheet 11 from absorbing humidity.
- The wound body 35 may further include a drying agent. In a case where the protective sheet 51 includes aluminum foil, the drying agent may be disposed on the outside surface of the aluminum foil, disposed between the aluminum foil and the tube end section 31a of the tubular member 31T, or fixed to the tubular member 31T to surround an end side of the aluminum foil.

In a case where the wound body 35 includes a drying agent, the light control sheet 11 is further restrained from absorbing humidity. At this time, in a case where the disposition of a drying agent is required to increase humidity absorption, the drying agent may be disposed on the whole of the wound body 35 in the circumferential direction to cover at least the long sides 15 in the light control sheet 11.

### [Packaging Box 61T]

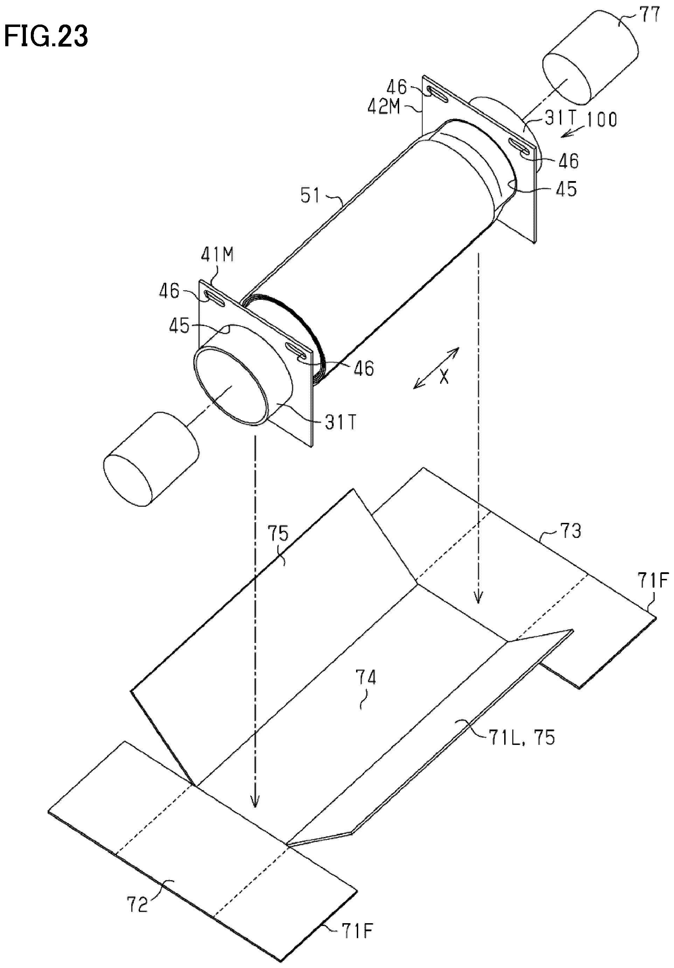

- The corrugated board included in the packaging box 61T may be a monolayer plate-shaped corrugated board or a plate-shaped corrugated board having a two-layer structure such as a bi-wall (registered trademark). In a case where the packaging box 61T is required to be higher in mechanical strength, it is preferable that the thickness of the plate-shaped corrugated board having the two-layer structure be greater than or equal to 10 mm.
- In a case where the packaging box 61T is required to be higher in mechanical strength, the bottom surface of the packaging box 61T may include a plurality of girders. The plurality of girders is arranged along the axial direction X and extends in the width direction of the packaging box 61T. In a case where the packaging box 61T includes a plurality of girders on the bottom surface, the deformation or the transformation of the bottom surface of the packaging box 61T caused by contact between the bottom surface and the floor surface is restrained.
- The packaging box 61T may have a rectangular solid shape and include peripheral walls standing from the bottom wall of the packaging box 61T. The peripheral walls of the packaging box 61T may include a pair of long walls extending in the axial direction X and a pair of short walls extending in the width direction of the packaging box 61T. The long walls of the packaging box 61T may be bonded to the short walls of the packaging box 61T by flaps.
- The packaging box 61T may be an A-type corrugated cardboard box including a flap as an upper wall or a B-type corrugated cardboard box including a body and a lid.
- As illustrated in Fig. 23, when the packaging body 100 is manufactured, a target in which the tubular member 31T around which the light control sheet 11 is wound is disposed is not the packaging box 61T assembled from a blank 71L, but may be the blank 71L that has not yet been assembled to the packaging box 61T. The blank 71L that has not yet been assembled to the packaging box 61T has the shape of one plate. The blank 71L includes a bottom wall 74 having the shape of a rectangular plate, short walls 72 and 73 connected to the pair of short sides of the bottom wall 74, long walls 75 connected to the pair of long sides of the bottom wall 74, and a pair of flaps 71F connected to the short walls 72 and 73.

When the packaging body 100 is manufactured, the tubular member 31T around which the light control sheet 11 is wound first has an arm section 77 of a crane inserted to the tube of the tubular member 31T. The arm section 77 extends in the axial direction X of the tubular member 31T. The tubular member 31T having the arm section 77 inserted thereto is hoisted by the crane and disposed on the bottom wall 74 of the blank 71L. It is to be noted that, in a case where the packaging body 100 includes the first fixation member 41M and the second fixation member 42M, the tubular member 31T has the arm section 77 inserted to the tube of the tubular member 31T with the first fixation member 41M fitted into one of the tube end sections 31a and the second fixation member 42M fitted into the other tube end section 31a.

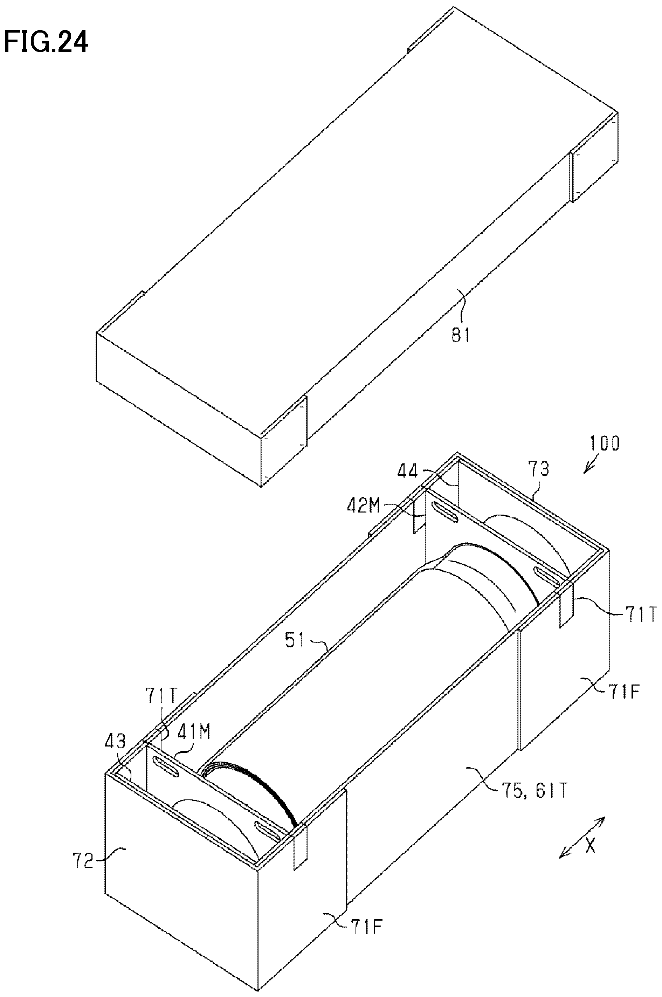

As illustrated in Fig. 24, when the tubular member 31T is disposed on the bottom wall 74 of the blank 71L, the arm section 77 of the crane is pulled out from the tube of the tubular member 31T. Subsequently, the blank 71L is folded to cause the short walls 72 and 73 and the long walls 75 of the blank 71L to stand up from the bottom wall 74. The flaps 71F of the short walls 72 and 73 are then folded to cover parts of the outside surfaces of the long walls 75 and fixed to the long walls 75 by tapes 71T. It is to be noted that, in a case where the packaging box 61T includes the third fixation member 43 and the fourth fixation member 44, one short wall 72 is folded with respect to the bottom wall 74 to cause one short wall 72 and the tube end section 31a of the tubular member 31T to sandwich the third fixation member 43. In addition, the other short wall 73 is folded with respect to the bottom wall 74 to cause the other short wall 73 and the tube end section 31a of the tubular member 31T to sandwich the fourth fixation member 44. This accommodates the light control sheet 11 wound around the tubular member 31T in a storage box having a rectangular solid shape that has an opening opposed to the bottom wall. A lid member 81 having a rectangular solid shape that opens downward is then attached to the storage box such that the lid member 81 closes the opening of the storage box.

According to the modification examples described above, effects listed below are obtained.
(4-8) In a case where the light control sheet 11 wound in the circumferential direction of the tubular member 31T is curved with respect to a virtual straight line extending in the axial direction X, the light control sheet 11 is likely to have a fold or a crease. In this regard, the tubular member 31T is transported with the arm section 77 of the crane inserted to the tube of the tubular member 31T and it is thus easy to keep a shape in which the tubular member 31T itself extends in the axial direction X. As a result, the tubular member 31T or the light control sheet 11 to be hoisted is restrained from being curved by its own weight with respect to the virtual straight line extending in the axial direction X. Then, as long as a configuration is adopted that makes it easy to keep the shape of the tubular member 31T extending in the axial direction X by the insertion of the arm section 77, it is possible to restrain the light control sheet 11 from having a fold or a crease.
(4-9) The hoisted tubular member 31T is disposed on the blank 71L that has not yet been assembled to the packaging box 61T. This makes it possible to restrain the light control sheet 11 from coming into contact with the packaging box 61T in comparison with the light control sheet 11 disposed in the assembled packaging box 61T. As a result, it is possible to restrain the light control sheet 11 from becoming scratched due to contact with the packaging box 61T.
(4-10) After the tubular member 31T is disposed on the blank 71L, the packaging box 61T is assembled from the blank 71L. This makes it possible to accommodate the light control sheet 11 in the packaging box 61T even if transportation with the arm section 77 of the crane sticking out from the tube end sections 31a of the tubular member 31T is adopted for the disposition of the tubular member 31T.
(4-11) The flaps 71F of the packaging box 61T are disposed outside the long walls 75, and a step corresponding to the thickness of each of the flaps 71F is thus formed on an outer surface of the packaging box 61T and is not formed on an inner surface of the packaging box 61T. This accommodates the light control sheet 11 in the packaging box 61T to cause the outside surface of the light control sheet 11 to be opposed to the flat surfaces that are the inner surfaces of the long walls 75. As a result, it is possible to restrain the outside surface of the light control sheet 11 from coming into contact with the step of the flap 71F and eventually restrain the light control sheet 11 from having a scratch due to the contact between the light control sheet 11 and the step.
   - In the packaging body 100 including the first fixation member 41M that is fitted into one of the tube end sections 31a and the second fixation member 42M that is fitted into the other tube end section 31a, at least one of the first easy-peel tape 16a and the second easy-peel tape 16b may be omitted. In addition, at least one of the third easy-peel tape 16c and the fourth easy-peel tape 16d may be omitted. Even in these configurations, it is possible to obtain the effects equivalent to those of (4-6) and (4-7) above.
   - Each of the flexible wiring substrates 12 may include the extending section 12a that extends in the axial direction X from the light control sheet 11. Even in this configuration, the effects equivalent to those of (4-1) to (4-11) above are obtained.

It is to be noted that the proximal end section 12b connected to the light control sheet 11 in the flexible wiring substrate 12 may be disposed along the axial direction X. The extending section 12a of the flexible wiring substrate 12 may be then disposed to extend in the circumferential direction of the tubular member 31T. At this time, a part of the extending section 12a of the flexible wiring substrate 12 may be fixed to at least one of the light control sheet 11 and the tubular member 31T by the third easy-peel tape 16c. The proximal end section 12b of the flexible wiring substrate 12 may be connected to the first transparent electrode layer 11c or the second transparent electrode layer 11f with an anisotropic electrically conductive agent or the like in between.

In this configuration, it is easier to cause the shape of the flexible wiring substrate 12 to follow the outer peripheral surface 31b of the tubular member 31T and restrain the flexible wiring substrate 12 from being lifted up in comparison with a case where the extending section 12a of the flexible wiring substrate 12 is disposed to extend in the axial direction X of the tubular member 31T. It is then easier to cause the shape of the flexible wiring substrate 12 to follow the outer peripheral surface 31b of the tubular member 31T. It is possible to restrain stress of peeling off the flexible wiring substrate 12 from the first transparent electrode layer 11c all the more from being applied to the connection portion between the first transparent electrode layer 11c and the flexible wiring substrate 12. In addition, it is possible to restrain stress of peeling off the flexible wiring substrate 12 from the second transparent electrode layer 11f all the more from being applied to the connection portion between the second transparent electrode layer 11f and the flexible wiring substrate 12. As a result, it is possible to restrain the flexible wiring substrate 12 from being peeled off from the first transparent electrode layer 11c by packaging the light control sheet 11 and restrain an increase in the electrical resistance between the flexible wiring substrate 12 and the first transparent electrode layer 11c. In addition, it is possible to restrain the flexible wiring substrate 12 from being peeled off from the second transparent electrode layer 11f by packaging the light control sheet 11 and restrain an increase in the electrical resistance between the flexible wiring substrate 12 and the second transparent electrode layer 11f.

At this time, at least one of the tubular member 31T and the light control sheet described above may further include an easy-peel tape that fixes the connection section between the flexible wiring substrate 12 and the light control sheet 11. It is to be noted that at least one of the first easy-peel tape 16a, the second easy-peel tape 16b, and the third easy-peel tape 16c may be omitted. In addition, the fourth easy-peel tape 16d may be omitted. In addition, at least one of the third fixation member 43 and the fourth fixation member 44 may be omitted.

The following describes the technical idea derived in the first embodiment to the fourth embodiment described above.
[Supplementary Note 1] A packaging body for a light control sheet, the packaging body including:
   a light control sheet; and
   a packaging member that supports the light control sheet, the packaging body being characterized in that
   the light control sheet includes a first transparent electrode film, a second transparent electrode film, a sealing section that seals a gap between the first transparent electrode film and the second transparent electrode film in an outer peripheral section of the light control sheet, and a liquid crystal composition that is enclosed in the gap surrounded by the sealing section, and
   the packaging body includes an easy-peel tape that covers the sealing section and fixes the sealing section to the packaging member.
[Supplementary Note 2] The packaging body for the light control sheet according to Supplementary Note 1, in which the easy-peel tape covers a whole of an outer peripheral section of the light control sheet along an end face in the outer peripheral section.

According to the configuration of Supplementary Note 2, a gap is unlikely to be formed between the easy-peel tape and the end face in the outer peripheral section. The easy-peel tape is likely to come into contact with the end face in the outer peripheral section and the strength of the adhesion of the easy-peel tape to the light control sheet thus increases. This makes it unlikely that the sealing section of the light control sheet is displaced with respect to the packaging member.

[Supplementary Note 3] The packaging body for the light control sheet according to Supplementary Note 1, in which
the packaging member includes
   a first protective plate,
   a second protective plate that sandwiches a whole of the light control sheet with the first protective plate,
   a first protective sheet that is sandwiched between the light control sheet and the first protective plate, the first protective sheet coming into contact with a whole of one of surfaces of the light control sheet, and
   a second protective sheet that is sandwiched between the light control sheet and the second protective plate, the second protective sheet coming into contact with a whole of another of the surfaces of the light control sheet,
the easy-peel tape covers a whole of the sealing section and fixes the light control sheet to the first protective sheet, and
the packaging body further includes a stretch film that is wound to press the second protective plate against the first protective plate.

According to the configuration of Supplementary Note 3, the first protective sheet is unlikely to be displaced in the planar direction with respect to the first protective plate. The second protective sheet is unlikely to be displaced in the planar direction with respect to the second protective plate. Therefore, in a case where the light control sheet is transported in the direction in which the surfaces of the light control sheet face the vertical direction, the light control sheet subjected to vibration at the time of transportation is positioned on the protective sheet and is unlikely to fall off from the protective plate.

[Supplementary Note 4] The packaging body for the light control sheet according to Supplementary Note 1, in which
one protector includes the first protective plate, the second protective plate, and the light control sheet that is sandwiched between the first protective plate and the second protective plate,
the packaging body includes:
   a packaging box that accommodates the protector; and
   a cushioning member that is disposed at an edge of the protector to space a corner portion of the protector apart from an inner surface of the packaging box in a planar direction of the light control sheet,
the cushioning member has a slit to which the corner portion of the protector is inserted, and
thickness of the slit is greater than thickness of the protector in a thickness direction of the light control sheet.

According to the configuration of Supplementary Note 4, the corner portion of the protector is unlikely to be displaced with respect to the cushioning member. This restrains the light control sheet from having friction or being deformed due to the displacement of the corner portion of the protector with respect to the cushioning member.

[Supplementary Note 5] The packaging body for the light control sheet according to Supplementary Note 1, in which
one protector includes the first protective plate, the second protective plate, and the light control sheet that is sandwiched between the first protective plate and the second protective plate,
the packaging body further includes
   a packaging box that accommodates the protector,
   a plurality of pairs of the protectors that is stacked, and
   a cushioning member that is disposed at an edge of each of the protectors to space the protector apart from an inner surface of the packaging box in a thickness direction of the light control sheet, and
the cushioning member is disposed at the edge of the one protector to space the protector apart from the other protector in the thickness direction of the light control sheet.

According to the configuration of Supplementary Note 5, one protector is spaced apart from the other protector in the thickness direction of the light control sheet. This reduces, between the protectors next to each other, stress or impact transmitted from one protector to another protector. As a result, the performance of protecting the quality of the light control sheet increases.

[Supplementary Note 6] A packaging body for a light control sheet, the packaging body including:
a light control sheet; and
a packaging member that supports the light control sheet, the packaging body being characterized in that
the light control sheet includes a first transparent electrode film, a second transparent electrode film, a sealing section that seals a gap between the first transparent electrode film and the second transparent electrode film in an outer peripheral section of the light control sheet, and a liquid crystal composition that is enclosed in the gap surrounded by the sealing section,
one protector includes the first protective plate, the second protective plate, and the light control sheet that is sandwiched between the first protective plate and the second protective plate, and
the packaging member includes
   a packaging box that accommodates the protector, and
   a cushioning member that is disposed at an edge of the protector to space a corner portion of the protector apart from an inner surface of the packaging box in a planar direction of the light control sheet and disposed at the edge of the protector to space the protector apart from the inner surface of the packaging box in a thickness direction of the light control sheet.

[Supplementary Note 7] The packaging body for the light control sheet according to Supplementary Note 1, in which the light control sheet includes a two-dimensional code marked by a laser.

### Reference Signs List

DL ... Planar direction
DT ... Thickness direction
11 ... Light control sheet
11a ... First transparent electrode film
11c ... First transparent electrode layer
11d ... Second transparent electrode film
11g ... Liquid crystal composition
11h ... Sealing section
12 ... Flexible wiring substrate
12a ... Extending section
12b ... Proximal end section
12c ... Distal end section
13 ... Outer peripheral section
14 ... Short side
15 ... Long side
16a ... First easy-peel tape
16b ... Second easy-peel tape
16c ... Third easy-peel tape
16d ... Fourth easy-peel tape
17 ... Adhesive tape
21 .. . First protective sheet
21T ... Winding start section
22 ... Second protective sheet
23 ... Fixation target section
24 ... Fixation target section
24a ... Fixation start point
24b ... Fixation end point
25 ... Winding end section
31T ... Tubular member
35 ... Wound body
41 ... Stretch film
51, 52 ... Protector
55 ... Corner portion
61 ... Cushioning member
62 ... Slit
71 ... Packaging box
71W ... Inner surface
100, 101, 102 ... Packaging body

## Claims

1. A packaging body for a light control sheet, the packaging body comprising:
a light control sheet; and
a packaging member that supports the light control sheet, the packaging body being **characterized in that**
the light control sheet includes
a first transparent electrode film,
a second transparent electrode film,
a sealing section that seals a gap between the first transparent electrode film and the second transparent electrode film in an outer peripheral section of the light control sheet, and
a liquid crystal composition that is enclosed in the gap surrounded by the sealing section, and
the packaging body includes an easy-peel tape that covers the sealing section and fixes the sealing section to the packaging member.

2. The packaging body for the light control sheet according to claim 1, wherein
the packaging member includes
a first protective plate,
a second protective plate that sandwiches a whole of the light control sheet with the first protective plate,
a first protective sheet that is sandwiched between the light control sheet and the first protective plate, the first protective sheet coming into contact with a whole of one of surfaces of the light control sheet, and
a second protective sheet that is sandwiched between the light control sheet and the second protective plate, the second protective sheet coming into contact with a whole of another of the surfaces of the light control sheet, and
the easy-peel tape covers a whole of the sealing section and fixes the light control sheet to the first protective sheet.

3. The packaging body for the light control sheet according to claim 2, wherein
the easy-peel tape is a first easy-peel tape,
the first transparent electrode film includes a first transparent electrode layer,
the light control sheet further includes a flexible wiring substrate that is connected to the first transparent electrode layer,
the flexible wiring substrate includes an extending section that extends toward outside of the first transparent electrode film,
the first easy-peel tape fixes a proximal end section of the extending section to the first protective sheet, and
the packaging body further includes a second easy-peel tape that fixes a distal end section of the extending section to the first protective sheet.

4. The packaging body for the light control sheet according to claim 2, further comprising:
a first adhesive tape that fixes a plurality of portions of the first protective sheet to the first protective plate; and
a second adhesive tape that fixes a plurality of portions of the second protective sheet to the second protective plate.

5. The packaging body for the light control sheet according to claim 2, wherein
the first protective plate, the second protective plate, and a plurality of sheets that is sandwiched between the first protective plate and the second protective plate are included in one protector,
the packaging body includes a plurality of the protectors that is stacked, and
of adjacent protectors, the first protective plate in one of the protectors is the second protective plate in another of the protectors.

6. The packaging body for the light control sheet according to claim 1, wherein
one protector includes a first protective plate, a second protective plate, and the light control sheet that is sandwiched between the first protective plate and the second protective plate, and
the packaging body further comprises:
a packaging box that accommodates the protector; and
a cushioning member that is disposed at an edge of the protector to space a corner portion of the protector apart from an inner surface of the packaging box in a planar direction of the light control sheet.

7. The packaging body for the light control sheet according to claim 6, wherein the cushioning member has a slit to which the corner portion of the protector is inserted.

8. The packaging body for the light control sheet according to claim 1, wherein
one protector includes a first protective plate, a second protective plate, and the light control sheet that is sandwiched between the first protective plate and the second protective plate, and
the packaging body further comprises:
a packaging box that accommodates the protector; and
a cushioning member that is disposed at an edge of the protector to space the protector apart from an inner surface of the packaging box in a thickness direction of the light control sheet.

9. A packaging body for a light control sheet, the packaging body comprising:
a light control sheet; and
a packaging member that supports the light control sheet, the packaging body being **characterized in that**
the light control sheet includes
a first transparent electrode film,
a second transparent electrode film,
a sealing section that seals a gap between the first transparent electrode film and the second transparent electrode film in an outer peripheral section of the light control sheet, and
a liquid crystal composition that is enclosed in the gap surrounded by the sealing section,
one protector includes
a first protective plate,
a second protective plate, and
the light control sheet that is sandwiched between the first protective plate and the second protective plate, and
the packaging member includes
a packaging box that accommodates the protector, and
a cushioning member that is disposed at an edge of the protector to space a corner portion of the protector apart from an inner surface of the packaging box in a planar direction of the light control sheet.

10. A packaging body for a light control sheet, the packaging body comprising:
a light control sheet; and
a packaging member that supports the light control sheet, the packaging body being **characterized in that**
the light control sheet includes
a first transparent electrode film,
a second transparent electrode film,
a sealing section that seals a gap between the first transparent electrode film and the second transparent electrode film in an outer peripheral section of the light control sheet, and
a liquid crystal composition that is enclosed in the gap surrounded by the sealing section,
one protector includes
a first protective plate,
a second protective plate, and
the light control sheet that is sandwiched between the first protective plate and the second protective plate, and
the packaging member includes
a packaging box that accommodates the protector, and
a cushioning member that is disposed at an edge of the protector to space the protector apart from an inner surface of the packaging box in a thickness direction of the light control sheet.

11. A packaging body for a light control sheet, the packaging body comprising:
a light control sheet; and
a packaging member that supports the light control sheet, the packaging body being **characterized in that**
the light control sheet includes
a first transparent electrode film,
a second transparent electrode film,
a sealing section that seals a gap between the first transparent electrode film and the second transparent electrode film in an outer peripheral section of the light control sheet, and
a liquid crystal composition that is enclosed in the gap surrounded by the sealing section,
the packaging member includes a tubular member around which the light control sheet is wound,
the tubular member includes two tube end sections on both sides of the tubular member in an axial direction, the two tube end sections being exposed from the light control sheet wound around the tubular member,
the light control sheet includes a winding start section that is a portion which comes into contact with an outer peripheral surface of the tubular member and at which the light control sheet starts to be wound around the tubular member,
the winding start section includes
one short side of the light control sheet, and
a fixation target section that is located apart from the short side on each of two long sides j oined to the short side, and
the packaging body further includes
first easy-peel tapes that fix the short side and a corner portion of the light control sheet to the outer peripheral surface of the tubular member, the corner portion including the short side and each of the long sides, and
second easy-peel tapes that fix the two respective fixation target sections to the outer peripheral surface in the tube end sections.

12. A packaging body for a light control sheet, the packaging body comprising:
a light control sheet; and
a packaging member that supports the light control sheet, the packaging body being **characterized in that**
the light control sheet includes
a first transparent electrode film,
a second transparent electrode film,
a sealing section that seals a gap between the first transparent electrode film and the second transparent electrode film in an outer peripheral section of the light control sheet, and
a liquid crystal composition that is enclosed in the gap surrounded by the sealing section,
the packaging member includes a tubular member around which the light control sheet is wound,
the tubular member includes two tube end sections on both sides of the tubular member in an axial direction, the two tube end sections being exposed from the light control sheet wound around the tubular member,
the light control sheet includes a winding start section that is a portion which comes into contact with an outer peripheral surface of the tubular member and at which the light control sheet starts to be wound around the tubular member,
the winding start section includes
one short side of the light control sheet, and
fixation target sections for two respective long sides joined to the short side, the fixation target sections being located apart from the short side on the two long sides,
each of the two fixation target sections is disposed only between the tube end section exposed in the axial direction from the fixation target section and the fixation target section, and
the packaging body includes
a first easy-peel tape that fixes the short side to an outer peripheral surface of the tubular member, and
two second easy-peel tapes that are spaced apart from each other in the axial direction, the two second easy-peel tapes fixing the fixation target sections one by one to the outer peripheral surface in the tube end sections.

13. The packaging body for the light control sheet according to claim 11 or 12, wherein
the first transparent electrode film includes a first transparent electrode layer,
the light control sheet further includes a flexible wiring substrate that is connected to the first transparent electrode layer,
the flexible wiring substrate includes an extending section that extends toward outside of the first transparent electrode film from the short side of the light control sheet, and
the packaging body further comprises a third easy-peel tape that fixes the extending section to the tubular member.
